# EUROPÄISCHE PATENTSCHRIFT

(11) **EP 3 709 133 B1**
(45) Veröffentlichungstag und Bekanntmachung des Hinweises auf die Patenterteilung: **17.05.2023**
(21) Anmeldenummer: 20161114.2
(22) Anmeldetag: 05.03.2020
(51) Int. Cl.: G06F 3/01

(54) **SYSTEM ZUR HAPTISCHEN INTERAKTION MIT VIRTUELLEN OBJEKTEN FÜR ANWENDUNGEN IN DER VIRTUELLEN REALITÄT**
VIRTUAL OBJECT HAPTIC INTERACTION SYSTEM FOR VIRTUAL REALITY APPLICATIONS
SYSTÈME D'INTERACTION HAPTIQUE AVEC DES OBJETS VIRTUELS POUR APPLICATIONS DANS LA RÉALITÉ VIRTUELLE

(30) Priorität: 15.03.2019 DE 102019106684
(43) Veröffentlichungstag der Anmeldung: 16.09.2020
(73) Patentinhaber: Technische Universität Dresden, 01069 Dresden (DE)
(72) Erfinder: Richter, Andreas, 01069 Dresden (DE); Henkel, Konrad, 01069 Dresden (DE); Paschew, Georgi, 01069 Dresden (DE); Marschner, Uwe, 01069 Dresden (DE); Körbitz, René, 01069 Dresden (DE); Germer, Maxim, 01069 Dresden (DE)
(74) Vertreter: Kailuweit & Uhlemann Patentanwälte Partnerschaft mbB

(56) Entgegenhaltungen:
- US-A1- 2012 293 411
- US-A1- 2015 254 898
- US-A1- 2018 157 317
- DANIEL LEITHINGER ET AL: "Direct and gestural interaction with relief", PROCEEDINGS OF THE 24TH ANNUAL ACM SYMPOSIUM ON USER INTERFACE SOFTWARE AND TECHNOLOGY : OCTOBER 16 - 19, 2011, SANTA BARBARA, CA, USA, ACM, NEW YORK, NY, 16. Oktober 2011 (2011-10-16), Seiten 541-548, XP058006154, DOI: 10.1145/2047196.2047268 ISBN: 978-1-4503-0716-1
- HIROO IWATA ET AL: "Project FEELEX", COMPUTER GRAPHICS. SIGGRAPH 2001. CONFERENCE PROCEEDINGS. LOS ANGELES, CA, AUG. 12 - 17, 2001; [COMPUTER GRAPHICS PROCEEDINGS. SIGGRAPH], NEW YORK, NY : ACM, US, 12. August 2001 (2001-08-12), Seiten 469-476, XP058253470, DOI: 10.1145/383259.383314 ISBN: 978-1-58113-374-5
- TAKAHIRO ENDO ET AL: "Five-Fingered Haptic Interface Robot: HIRO III", IEEE TRANSACTIONS ON HAPTICS, IEEE, USA, vol. 4, no. 1, 1 January 2011 (2011-01-01) , pages 14-27, XP011349657, ISSN: 1939-1412, DOI: 10.1109/TOH.2010.62

## Beschreibung

Die Erfindung betrifft ein System zur haptischen Interaktion mit virtuellen Objekten, welches zumindest eine Visualisierungseinheit zur Visualisierung virtueller Objekte und der Nutzerhand, eine Ausgabeeinheit zur Wiedergabe haptischer Eindrücke zumindest mittels Kraftrückkopplung auf Fingerkuppen der Nutzerhand und eine Datenverarbeitungseinheit zur Verarbeitung von Eingabedaten und Steuerung der Visualisierungseinheit und der Ausgabeeinheit umfasst, wobei ein virtuelles Objekt durch ortsabhängig veränderliche haptische Eigenschaften charakterisiert ist, die mittels einer haptischen Ausgabeeinheit nachgebildet werden.

Haptische Systeme, z. B. Displays, sind bisher nur unzureichend in der Lage, realitätsnahe Impressionen zu virtuellen dreidimensionalen Objekten hinsichtlich deren Form und Oberflächeneigenschaften zu vermitteln. Leistungsfähige haptische Systeme mit einem akzeptablen Repertoire an darstellbaren virtuellen Objekten sind außerordentlich komplex und kostenintensiv aufgebaut.

Haptische Displays werden in statische (ortsfeste) und dynamische Displays unterteilt. Statische haptische Displays bestehen analog zu taktilen statischen Displays zumeist aus vielen Aktoren, wobei die Anzahl der Aktoren von der Detailtreue und der Größe bzw. der Anzahl der darzustellenden Objekte abhängt. Eine höhere Detailtreue korreliert mit einer kleineren Taxelgröße und mit einer höheren Auflösung. Aus der Größe und der Anzahl der Objekte ergeben sich eine minimal erforderliche Displaygröße und Aktoranzahl. Der Darstellungsbereich ist durch die Displaygröße begrenzt. Durch die ortsfeste Lage im Raum können statische haptische Displays externe Gegenkräfte (z.B. Gewichtskraft) darstellen. Ortsfeste haptische Displays werden vom Nutzer meist mit der bloßen, also nicht hardwarebeaufschlagten Hand angefasst. Eine direkte Berührung der Oberfläche ist damit möglich. Ein Beispiel für statische (ortsfeste) haptische Displays ist in Kim SC., Han BK., Seo J., Kwon DS. "Robotic Touch Surface: 3D Haptic Rendering of Virtual Geometry on Touch Surface", in: Kajimoto H., Ando H., Kyung KU. (eds) "Haptic Interaction" Lecture Notes in Electrical Engineering, vol 277, Springer, Tokyo, beschrieben. Dynamische haptische Displays sind meist am Nutzer montiert und können durch den Nutzer im Raum bewegt werden. Die Nutzerhand ist hardwarebeaufschlagt, da z.B. die Fingerkuppen mit technischen Apparaturen verbunden sind. Verglichen mit statischen (ortsfesten) Displays haben dynamische Displays typischerweise eine geringere Aktoranzahl und eine geringere Masse. Durch die mechanische Ankopplung am Menschen können keine externen Kräfte (z.B. Gewichtkraft) dargestellt werden. Da das dynamische Display durch den Nutzer selbst bewegt wird, ist der Darstellungsbereich für virtuelle Objekte theoretisch unbegrenzt. Eine realitätsnahe Objektdarstellung ist nur möglich, wenn das dargestellte Objekt schwerelos ist und nicht mit anderen Objekten interagiert (externe Kräfte können nicht abgebildet werden). Durch die Ankopplung am Menschen können nur zum Menschen relative Kräfte (z.B. Kraft zwischen Daumen und Zeigefinger) abgebildet werden. Eine Darstellung von Oberflächeneigenschaften wie Kontur und Textur ist durch die dauerhafte Anbindung einer technischen Apparatur an die Fingerkuppe nicht möglich bzw. eingeschränkt.

Ein Nachteil bekannter Systeme, welcher hauptsächlich statische haptische Displays betrifft, besteht in der Beschränkung der auflösungsbedingten Detailtreue. Die Auflösung eines haptischen Systems ist dabei durch die Anzahl der Oberflächenpunkte bzw. -ausschnitte des Displays pro darzustellender virtueller Fläche gegeben, wobei die Gesamtheit der Oberflächenausschnitte, deren Position und/oder Eigenschaften über Aktoren definiert einstellbar sind, den erkundbaren haptischen Bereich, im Folgenden Interaktionsbereich genannt, ergibt. Um einen großen Interaktionsbereich mit hoher Auflösung, also vielen Oberflächenausschnitten, darstellen zu können, wird eine entsprechend große Anzahl von Aktoren benötigt, so dass die Systeme nachteilig durch einen hohen technischen Aufwand, hohe Kosten, hohe Masse und einen hohen Energieverbrauch gekennzeichnet sind.

Ein weiterer Nachteil bekannter Systeme, welcher hauptsächlich dynamische haptische Displays betrifft, besteht darin, dass die Immersion in virtuelle oder erweiterte Realitäten dadurch beschränkt wird, dass das Betasten virtueller Objekte nicht mit der bloßen, sondern nur mit hardwarebeaufschlagter Hand oder mittels eines Stifts oder nur mit einem einzelnen Finger möglich ist.

So ist in der bereits erwähnten Druckschrift Kim SC., Han BK., Seo J., Kwon DS. "Robotic Touch Surface: 3D Haptic Rendering of Virtual Geometry on Touch Surface". In: Kajimoto H., Ando H., Kyung KU. (eds) "Haptic Interaction" Lecture Notes in Electrical Engineering, vol 277. Springer, Tokyo, ein als "Robotic Touch Surface" bezeichnetes haptisches System, welches einem statischen, ortsfesten Display entspricht, beschrieben, welches ein Display mit haptischer Oberfläche umfasst, das mit einer Aktorik zur Einstellung des Kippwinkels ausgerüstet ist. Die Displayoberfläche wird dabei am Berührungspunkt des Nutzerfingers mechanisch entlang der virtuellen 3D-Geometrie orientiert. Das System ermöglicht dadurch das Ertasten einer Form mit einem Finger, was allerdings nicht ausreicht, um eine Immersion in der virtuellen Welt zu erreichen.

Zur Abbildung eines Reliefs sind aus dem Stand der Technik Stift-Matrizen als statische (ortsfeste) Displays bekannt, z. B. beschrieben in Leithinger, D. et al. "Direct and gestural interaction with relief: A 2.5D shape display." Proceedings of the 24th Annual Symposium on User Interface Software and Technology (UIST) (2011) 11, 541, ACM, New York. Eine Stift-Matrix ist ein Multi-Aktor-System, wobei jeder Stift seine Höhe in Bezug auf eine Oberfläche ändern kann, um ein dreidimensionales Relief zu erschaffen. Nachteilig ist die Objektdarstellung mittels einer Stift-Matrix aufgrund der unidirektionalen Bewegung der Aktorik nur sehr eingeschränkt möglich. Die Stift-Matrix-Displays weisen außerdem nachteilig eine sehr hohe technische Komplexität auf, wobei jeweils nur ein kleiner Teil des Systems zum Tasten genutzt wird. Ähnliche statische Displays sind in der US 2012/0293411 A1, die inhaltlich dem oben genannten Artikel von Leithinger et al. entspricht, sowie der US 2015/0254898 A1 und in Iwata et al.: "Project FEELEX: Adding haptic surface to graphics", Computer Graphics Proceed. SIGGRAPH, 2001 beschrieben. In den beiden zuletzt genannten Dokumenten ist die eigentliche Stiftmatrix durch eine elastische Schicht bedeckt, so dass sich virtuelle Objekte durch das erzeugte reliefartige Oberflächenbild haptisch oder direkt visuell erkunden lassen.

Aus dem Stand der Technik ist des Weiteren der tragbare haptische Handschuh "Dexmo" (Bsp. für ein dynamisches haptisches Display) von Dexta Robotics (http://www.dextarobotics.com/) bekannt (z.B. US20160259417A1), der eine Kraftrückkopplung (Force-Feedback) auf Basis integrierter Aktorik und Sensorik gibt, wobei jede Fingerkuppe über einen separaten Aktor- bzw. Blockiermechanismus einzeln gesteuert wird. Ein weiterer tragbarer haptischer Handschuh mit über Kabel angeschlossener Sensorik (z.B. US20120025945A1) und Aktorik ist der "CyberGrasp" von CyberGlove Systems (http://www.cyberglovesystems.com/cybergrasp/). "Dexmo" und "CyberGrasp" ermöglichen das Greifen virtuell sichtbarer Objekte mit Force-Feedback. Nachteilig ist die Darstellung auf greifbare Objekte beschränkt; eine Darstellung externer Kräfte, z. B. der Gewichtskraft, die auf das Objekt ausgeübt wird, ist nicht möglich. Außerdem sind aufwändige elektromechanische Bauteile mit Teilen der Benutzerhand zu koppeln, in der Form, dass eine Art Exoskelett mit dem Handschuh verbunden ist. Die Masse und Kabelführung der elektromechanischen Bauteile behindert dabei die freie Bewegung des Nutzers und beeinflusst nachteilig die Immersion in die virtuelle Welt.

Mit dem HIRO III ist ein dynamischer haptischer Handschuh (mit begrenztem Bewegungsbereich) bekannt, mit dem auch die Wiedergabe externer Kräfte wie der Gewichtskraft möglich ist (Endo, T. et al. "Five-Fingered Haptic Interface Robot: HIRO III." IEEE Trans Haptics (2011) 4, 14). HIRO III umfasst eine fünffingrige haptische Hand, die an einem Roboterarm befestigt ist. Die Fingerspitzen der haptischen Hand werden durch passive magnetische Kugelgelenke mit den Fingerspitzen der Nutzerhand, die mit einer Halterung versehen sind, verbunden. Auch bei diesem System ist dadurch nachteilig die Hand des Nutzers durch Hardware beschwert und die Immersion in die virtuelle Welt behindert. Durch die magnetischen Kräfte spürt der Nutzer auf seine Fingerkuppen wirkende Zug- und/oder Druckkräfte, wodurch eine Immersion gestört wird. Darüber hinaus können Kanten oder eine bestimmte Textur der Oberfläche oder deren Temperatur nicht oder nur grob an die Hand des Nutzers übermittelt werden.

Ein tragbares, dynamisches haptisches System, das auch zur Darstellung externer Kräfte, z. B. der Gewichtskraft, geeignet ist, ist in Choi, I. et al. "Grabity: A wearable haptic interface for simulating weight and grasping in virtual reality", Proceedings of the 29th Annual Symposium on User Interface Software and Technology (UIST) (2017) ACM, New York, offenbart. Hierbei handelt es sich um ein Greifwerkzeug, bei dem die Trägheitskraft der gegriffenen virtuellen Objekte durch asymmetrische Vibrationen des Werkzeugs mittels Schwingspulenaktoren simuliert wird. Eine weitergehende haptische Interaktion ist mit dem vorgestellten Werkzeug nicht möglich.

Ein weiteres taktiles System ist in der US 2018/0157317 A1 beschrieben. Bei diesem ist ein deformierbares, formveränderliches taktiles Display auf einer Positioniervorrichtung befestigt. Das Display kann entsprechend der räumlichen Lage des anzuzeigenden Oberflächensegments eines virtuellen Körpers im Raum durch die Positioniervorrichtung in bis zu 6 Richtungen bewegt werden.

Prinzipiell sind die Möglichkeiten der statischen haptischen Displays für eine vollständige Immersion viel größer als die der dynamischen Displays. Die Qualität der Immersion beschreibt, inwieweit der Benutzer unterscheiden kann, ob er sich in einer realen oder virtuellen Welt befindet. Je höher die Qualität der Immersion, desto weniger unterscheidbar sind reale und virtuelle Welt. Das Ziel ist, dass die Qualität so hoch ist, dass der Nutzer die virtuelle Hand als seine eigene und den virtuellen Körper als einen real existierenden Körper annimmt.

Für die Akzeptanz sind mehrere Eigenschaften des Systems wichtig, dazu zählen u.a. die Charakteristik der berührten Objektoberfläche und die Simultanität zwischen der haptischen Berührung z.B. mit der optischen Darstellung und/oder dazu gehörenden Geräuschen. Die Bedeutung der Simultanität wurde mittels Versuchen, beispielsweise beschrieben in Petkova, V.I., Ehrsson, H.H. "If I were you: Perceptual illusion of body swapping", PLoS one 2008 3(12), e3832, bestätigt. Ein weiterer wichtiger Gesichtspunkt in Bezug auf die Akzeptanz eines Systems ist die Beaufschlagung der Nutzerhand mit einer Hardware. Sind die Hand und insbesondere die Fingerkuppen hardwarebeschwert, wird die Immersion gestört.

Aufgabe der vorliegenden Erfindung ist es, die aufgeführten Nachteile des Standes der Technik zu überwinden und ein System anzugeben, mittels dessen eine naturnahe Vermittlung von Impressionen zu Form und Oberflächeneigenschaften virtueller dreidimensionaler Objekte, die haptische Interaktion mit diesen und die Wiedergabe von Eindrücken zu auf die Objekte wirkenden externen Kräften für die bloße, nicht hardwarebeschwerte Hand möglich ist, wobei der technische Aufwand und damit einhergehend insbesondere die Masse des Systems deutlich geringer sein soll als aus dem Stand der Technik bekannt. Mit anderen Worten soll ein haptisches Interface zum Ertasten virtueller Objekte mit bloßen Fingern geschaffen werden, das sich durch eine verringerte technische Komplexität und eine geringe Masse bei möglichst vollständiger Immersion des Nutzers in die virtuelle Welt auszeichnet.

Die Aufgabe wird gelöst durch ein System mit den Merkmalen des Anspruchs 1 und ein Verfahren mit den Merkmalen des Anspruchs 15. Weiterbildungen der Erfindung sind in Unteransprüchen angegeben.

Die erfindungsgemäße Lösung basiert insbesondere darauf, dass die technische Komplexität und die Masse des Systems im Vergleich zu einem statischen haptischen Display dadurch reduziert werden, dass jeweils nur zur Funktion notwendige, z.B. fingerkuppennahe, Ausschnitte des virtuellen Objekts durch Ausschnitte des Interaktionsbereichs der haptischen Ausgabeeinheit (des Displays) als Tastfläche dargestellt werden, wobei die Darstellung dynamisch ist. Aufgrund der Bewegbarkeit dieser Ausschnitte können auch größere Oberflächen abgebildet werden. Die darstellbaren Ausschnitte sind nicht ausschließlich auf fingerkuppennahe Ausschnitte begrenzt, sondern können jedem beliebigen Handbereich, z.B. Bereichen des Handtellers oder des Handgelenks, zugeordnet werden. Mittels einer Basisbezugsfläche, z. B. dem Tisch, auf dem das System steht, ist es möglich, externe Kräfte wie die Gewichtskraft auf das virtuelle Objekt, nachzubilden. Allgemein können auf den Nutzer wirkende Gegenkräfte (z.B. von nicht bewegbaren Objekten) nachgebildet werden. Die Basisbezugsfläche ist vorzugsweise statisch in Bezug auf mindestens eine Raumrichtung gelagert, so dass in diese mindestens eine Raumrichtung wirkende externe Kräfte wiedergegeben werden können. In anderen Raumrichtungen kann die Basisbezugsfläche verschiebbar gelagert sein. Die Lagerung ist dabei vorzugweise reibungsarm, d.h. zur kräftearmen Verschiebung, ausgeführt. Es sind auch Ausführungsbeispiele mit variablen Bezugsflächen möglich, d.h. die Anzahl und Richtung nachbildbarer Kräfte und Drehmomente sind beliebig. Dies ist über eine entsprechende Aktorik realisierbar. Neben dem Erzeugen von Gegenkräften dient die Basisbezugsfläche auch der Festlegung des Ortes, an welchem sich das System im virtuellen Raum befindet, und stellt somit ein Bezugskoordinatensystem bereit.

Das erfindungsgemäße System ist zur haptischen Interaktion mit virtuellen Objekten geeignet. Dabei wird ein virtuelles Objekt durch ortsabhängig veränderliche haptische, also fühlbare, Eigenschaften charakterisiert, wobei sich die Begriffe orts- bzw. positionsabhängig auf den Ort bzw. die Position eines Oberflächenausschnitts auf dem virtuellen Objekt beziehen. Mit anderen Worten weist das virtuelle Objekt an voneinander verschiedenen Stellen seiner Oberfläche sich voneinander unterscheidende haptische Eigenschaften auf. Die haptischen Eigenschaften beziehen sich auf 3D-Informationen (Reliefdaten), also die Nachbildung von Körperformen. Zusätzlich können auch taktile Eigenschaften des virtuellen Objekts mittels einer Kontaktfläche nachgebildet werden. Die haptischen und taktilen Eigenschaften der Kontaktfläche sind in demselben Maße ortsabhängig veränderlich wie die haptischen und taktilen Eigenschaften des virtuellen Objekts. Die taktilen Eigenschaften beschreiben die Beschaffenheit (Rauheit, Temperatur etc.), also vor allem die Textur, einer Oberfläche.

Das erfindungsgemäße System umfasst zumindest folgende Komponenten:
- eine Visualisierungseinheit zur Visualisierung virtueller Objekte und der Nutzerhand,
- eine haptische Ausgabeeinheit zur Wiedergabe haptischer Eindrücke zumindest mittels Kraftrückkopplung auf Fingerkuppen der Nutzerhand, und
- eine Datenverarbeitungseinheit zur Verarbeitung von Eingabedaten und Steuerung der Visualisierungseinheit und der haptischen Ausgabeeinheit.

Bei der Visualisierungseinheit kann es sich beispielsweise um eine 3D-Brille handeln. Das virtuelle Objekt wird mittels der Visualisierungseinheit zumeist stereoskopisch dargestellt.

Bei der Datenverarbeitungseinheit kann es sich beispielsweise um einen Mikrocontroller oder einen PC mit Grafik- und Physikengine handeln. Die Datenverarbeitungseinheit hat auch die Aufgabe der Synchronisation zeitlicher und örtlicher Ereignisse im virtuellen Raum und im realen Raum, bevorzugt in Echtzeit.

Die haptische Ausgabeeinheit ist zur Wiedergabe haptischer Eindrücke zumindest mittels Kraftrückkopplung geeignet, wobei "Kraftrückkopplung" (auch als Force-Feedback bezeichnet) eine Rückmeldung von Kräften an den Nutzer unter Ausnutzung seiner haptischen Wahrnehmung bezeichnet.

Die haptische Ausgabeeinheit weist zumindest auf:
- mindestens zwei mitführbare Ausschnitte eines Interaktionsbereiches der haptischen Ausgabeeinheit, wobei die mitführbaren Ausschnitte als Tastflächen ausgebildet sind und jeweils ein mitführbarer Ausschnitt einer Fingerkuppe der Nutzerhand zugeordnet ist und von dieser bewegt werden kann, wobei die Position der Fingerkuppe auf dem mitführbaren Ausschnitt veränderbar ist,
- ein fingerbezogenes Positioniersystem, umfassend mindestens zwei jeweils einem mitführbaren Ausschnitt des Interaktionsbereichs zugeordnete, fingerbezogene Positionierelemente, wobei die fingerbezogenen Positionierelemente und der ihnen zugeordnete, mitführbare Ausschnitt in Wirkverbindung stehen,
- ein globales Positioniersystem, mittels dessen das fingerbezogene Positioniersystem bewegbar ist, oder das als eine Verschiebung der virtuellen Welt, in der das virtuelle Objekt angeordnet ist, ausgebildet ist. In letzterem Fall ändert sich die Lage des globalen Positioniersystems im realen Raum nicht, sondern nur die Position der visualisierten Nutzerhand in der virtuellen Welt; das heißt, die virtuelle Welt wird in der virtuellen 3D-Darstellung vor dem Benutzer bewegt und/oder gedreht.

Der Interaktionsbereich ist ein vorgegebener Raumbereich, der durch die räumlichen Grenzen der Bewegbarkeit des globalen Positioniersystems und der fingerbezogenen Positionierelemente definiert ist und in dem der Nutzer haptische und gegebenenfalls auch taktile Eindrücke der Eigenschaften des virtuellen Objekts erfahren kann. Die mitführbaren Ausschnitte sind innerhalb des Interaktionsbereichs frei beweglich und bilden die Oberfläche des virtuellen Objektes jeweils an der (virtuellen) Position der Fingerkuppen auf dem virtuellen Objekt ab. Da die Position der Fingerkuppe auf dem mitführbaren Ausschnitt veränderlich ist, d.h. die Fingerkuppe nicht fest mit dem mitführbaren Ausschnitt verbunden ist, ist die Hand des Nutzers nicht durch Hardware beaufschlagt, das heißt, der Nutzer arbeitet mit der bloßen Hand, so dass die Immersion in die virtuelle Welt durch ein naturnahes oder gar naturidentisches Empfinden unterstützt wird. So hat er bspw. nicht das Empfinden, seine Hand würde an der Oberfläche des virtuellen Objekts "haften" oder der Nutzer würde mit einem technischen System interagieren. Darüber hinaus kann durch die freie Beweglichkeit der Fingerkuppe auf dem mitführbaren Ausschnitt bei Vorhandensein einer taktilen Aktorik, die geeignet ist, eine gegebenenfalls vorhandene Kante des virtuellen Objekts innerhalb des mitführbaren Ausschnitts abzubilden, eine solche Kante wesentlich feiner, genauer und naturnaher erfühlt werden.

Jeder der mitführbaren Ausschnitte weist eine an die Größe der zugeordneten Fingerkuppe angepasste Mindestgröße auf. Diese beträgt vorzugsweise für einen mitführbaren Ausschnitt, der einem Daumen zugeordnet ist, mindestens 1,5 cm × 1,5 cm, besonders bevorzugt mindestens 2 cm × 2 cm, und für einen mitführbaren Ausschnitt, der einem anderen Finger als einem Daumen zugeordnet ist, vorzugsweise mindestens 1 cm × 1 cm, besonders bevorzugt mindestens 1,5 cm × 1,5 cm. Selbstverständlich können die mitführbaren Ausschnitte auch kreisrunde oder ovale oder andere Umfangsgeometrien haben und sind nicht auf rechteckige oder quadratische Umfangsgeometrien beschränkt. Bei runden Umfangsgeometrien entsprechen die genannten bevorzugten Mindestwerte jeweils dem bevorzugten Mindestradius des mitführbaren Ausschnitts.

Des Weiteren umfasst die Ausgabeeinheit:
- Sensorik, die zumindest zur Erfassung der Position der mitführbaren Ausschnitte des Interaktionsbereichs bezüglich des virtuellen Objekts und zur Erfassung der Kontaktkräfte zwischen den mitführbaren Ausschnitten und den Fingerkuppen der Nutzerhand ausgebildet ist, sowie
- Aktorik, die zumindest zur Positionierung der mitführbaren Ausschnitte des Interaktionsbereichs bezüglich des virtuellen Objekts und zur Ausübung von Kontaktkräften auf die Fingerkuppen mittels der mitführbaren Ausschnitte, also zur Kraftrückkopplung, ausgebildet ist.

Dabei kann die Sensorik auch als eine nicht auf der Auswertung von Kraft oder Drehmoment basierenden Sensorik ausgebildet sein oder diese zumindest enthalten. Eine solche Sensorik wäre bspw. eine optische Sensorik basierend auf der Detektion von Licht im für Menschen sichtbaren Wellenlängenbereich oder eine Sensorik basierend auf Infrarot- oder U ltraschalldetektion.

Aufgrund der freien Bewegbarkeit der mitführbaren Ausschnitte des Interaktionsbereichs im Interaktionsbereich und dem damit verbundenen Verbleib der Fingerkuppen auf jeweils dem gleichen Ausschnitt des Interaktionsbereichs sind weniger Aktoren bzw. weniger Freiheitsgrade im Positionierungssystem notwendig, so dass das Positionierungssystem technisch einfacher, in Bezug auf seine Masse leichter und insgesamt kostengünstiger hergestellt werden kann.

Der haptischen Ausgabeeinheit ist eine Basisbezugsfläche für die Kraftrückkopplung zugewiesen. Bei dieser Basisbezugsfläche handelt es sich in der realen Welt beispielsweise um die Grundfläche, auf der am globalen Positioniersystem das fingerbezogene Positioniersystem angeordnet ist, z. B. um einen Tisch oder einen Roboterarm oder einen Teil des menschlichen Körpers. In der virtuellen Welt ist in der Basisbezugsfläche die Darstellung des virtuellen Objekts angeordnet.

Vorteilhaft ermöglicht die Basisbezugsfläche in Verbindung mit dem globalen Positioniersystem die Wiedergabe externer Kräfte, insbesondere der Gewichtskraft des virtuellen Objektes oder der Trägheitskraft beim Beschleunigen des virtuellen Objektes durch den Nutzer.

Die mitführbaren Ausschnitte des Interaktionsbereichs können beispielsweise als plane oder ergonomisch geformte Tastflächen ausgebildet sein.

Das globale Positioniersystem kann mit mindestens einem zusätzlichen globalen Positioniersystem für einzelne Finger der Nutzerhand, insbesondere für den Daumen, kombiniert werden.

Vorteilhaft werden keine zusätzlichen Hilfsmittel wie ein Handschuh oder ein Stift benötigt, die die Nutzerhand belasten und die Immersion des Nutzers in der virtuellen Welt erschweren können. Die Nutzerhand liegt ohne eine weitere Verbindung mit der Hardware des haptischen Systems auf den als Tastflächen ausgebildeten Ausschnitten des Interaktionsbereichs auf.

Durch die Reduktion eines großen Displays auf etwa fingerkuppengroße, mitführbare Ausschnitte des Interaktionsbereichs, die in Abhängigkeit von ihrer globalen und/oder lokalen Position ihre Eigenschaften ändern, werden vorteilhaft die Beschränkungen des bisherigen Stands der Technik insbesondere bezüglich der Systemmasse und -kosten abgemildert.

Darüber hinaus kann das fingerbezogene Positioniersystem auch universell einsetzbare, mitführbare Ausschnitte enthalten, welche zur Berührung von Handtellern, Handgelenk etc. geeignet sind.

Mit einem fuß- oder zehenbezogenen Positioniersystem und einer an erhöhte Stabilitätsanforderungen angepassten Bauweise ist das erfindungsgemäße System auch zur haptischen Erkundung von z. B. Geländeoberflächen mittels eines Fußes verwendbar.

In Ausführungsformen weist das erfindungsgemäße System weiterhin eine Positionssensorik zur kontaktlosen Erfassung der räumlichen Position der Hand des Nutzers auf. Die Positionssensorik dient zur kontaktlosen Erfassung der Position der Hand des Nutzers und/oder der haptischen Ausgabeeinheit im realen Raum. Die Positionsdaten werden von der Datenverarbeitungseinheit genutzt, um die Hand des Nutzers und/oder Bezugspunkte auf der Oberfläche des virtuellen Objekts, die der Position der haptischen Ausgabeeinheit im realen Raum entsprechen, durch die Visualisierungseinheit darzustellen und/oder eine Synchronisation von Ereignissen im virtuellen Raum und im realen Raum zu ermöglichen. Unter Synchronisation von Ereignissen ist zu verstehen, dass Ereignisse verschiedener Domänen sowohl zeitlich, als auch örtlich synchronisiert stattfinden. Visuelle Informationen der virtuellen Welt müssen zeitgleich mit den dazugehörigen haptischen Reizen der realen Welt bereitgestellt werden. Zusätzlich müssen visuelle Informationen der virtuellen Welt am selben Ort mit den dazugehörigen haptischen Reizen der realen Welt bereitgestellt werden. Bei erfolgreicher Synchronisation fühlt ein Nutzer einen haptischen Reiz an einem Ort der realen Welt zeitgleich mit der Visualisierung dieses Reizes am gleichen Ort der virtuellen Welt. Für den Nutzer entsteht nur dann eine konsistente virtuelle Welt (Immersion), wenn multimodale/multisensorische Reize synchron bereitgestellt werden. Durch die Synchronisation von Ereignissen wird insbesondere eine Kontaktherstellung zwischen Nutzerhand und haptischer Ausgabeeinheit, und insbesondere den Tastflächen, ohne Blickkontakt des Nutzers mit der haptischen Ausgabeeinheit im realen Raum ermöglicht. Somit kann ein Nutzer seine Fingerkuppen auch dann präzise auf den Tastflächen ohne vorherigen Kontakt positionieren, wenn er bereits mit Hilfe der Visualisierungseinheit in die virtuelle Welt eingetaucht ist, also bspw. die 3D-Brille bereits aufgesetzt hat.

In einer Ausführungsform der Erfindung verfügt die haptische Ausgabeeinheit über fünf mitführbare Ausschnitte des Interaktionsbereichs. Jedem Finger der Nutzerhand kann dadurch ein mitführbarer Ausschnitt des Interaktionsbereichs und damit eine Tastfläche zugeordnet werden.

Vorteilhaft zeichnet sich diese Ausführungsform durch eine besonders gute Immersion des Nutzers in der virtuellen Welt aus.

In einer weiteren Ausführungsform der Erfindung ist die haptische Ausgabeeinheit zur Wiedergabe haptischer Eindrücke mittels eines taktilen Feedbacks zusätzlich zur Kraftrückkopplung auf Fingerkuppen der Nutzerhand ausgebildet, das heißt, sie weist eine Aktorik für taktile Reize auf. Während bei der Kraftrückkopplung die Positionen der einzelnen Finger beeinflusst werden, können mittels eines taktilen Feedbacks z. B. auch die Textur und/oder die Temperatur der Oberfläche eines virtuellen Objekts nachgebildet werden.

Diese Ausführungsform verbessert ebenfalls die Immersion des Nutzers in die virtuelle Welt.

In einer Ausgestaltung dieser Ausführungsform sind die mitführbaren Ausschnitte des Interaktionsbereichs bezüglich ihrer Kontur oder Textur oder Vibrationsart oder Vibrationsstärke oder Temperatur oder Elastizität oder einer Kombination aus den vorgenannten Eigenschaften änderbar ausgebildet. Die Temperaturregelung der Tastflächen kann beispielsweise über Peltier-Elemente und/oder Heizer vorgenommen werden. Über Exciter, die die Tastfläche zu Vibrationen anregen, können Texturen, insbesondere die Rauigkeit, der virtuellen Oberfläche nachgebildet werden. Eine Änderung der Elastizität des virtuellen Objekts kann über auf die Tastflächen wirkende Versteifungsmechanismen wie das Particle-Jamming, also den Umstand, dass sich die Granulatteilchen eines granularen Mediums oberhalb einer gewissen Packungsdichte gegenseitig blockieren und an weiterer Bewegung hindern können, während das Medium bei geringerer Packungsdichte der granularen Teilchen deformierbar ist, vollzogen werden.

In einer weiteren Ausführungsform des erfindungsgemäßen Systems weist die haptische Ausgabeeinheit Justageelemente zur Adaptierung an die Größe der Nutzerhand auf. Dabei kann jeweils ein Justageelement an einem fingerbezogenen Positionierelement angeordnet sein, so dass die fingerbezogenen Positionierelemente gegeneinander verschiebbar ausgebildet sind und ihr Abstand zueinander änderbar ist. Die Justageelemente können für ein manuelles Einstellen und Fixieren der relativen Position der fingerbezogenen Positionierelemente zueinander ausgebildet sein. In diesem Fall werden die fingerbezogenen Positionierelemente durch den Nutzer selbst oder eine Hilfsperson bewegt und bspw. mittels Feststellschrauben fixiert. Jedoch können die Justageelemente auch für eine Selbstadaption der fingerbezogenen Positionierelemente an die Nutzerhand ausgebildet sein. In diesem Fall richten sich die fingerbezogenen Positionierelemente zueinander automatisch bzw. selbsttätig derartig aus und fixieren diese Position, dass sie der Größe der Nutzerhand gerecht werden und entsprechen.

Die Positionierelemente des fingerbezogenen Positioniersystems und das globale Positioniersystem weisen jeweils zwischen einem und sechs Freiheitsgrade der Bewegung auf. In einer weiteren Ausführungsform des erfindungsgemäßen Systems weisen die Positionierelemente des fingerbezogenen Positioniersystems und/oder das globale Positioniersystem jeweils sechs Freiheitsgrade der Bewegung, also alle drei translatorischen und alle drei rotatorischen, auf.

In einer weiteren Ausführungsform ist das globale Positioniersystem in mindestens einem Freiheitsgrad fixiert und besonders reibungsarm gelagert, sodass es möglichst kräftearm durch den Nutzer (ohne Antrieb) in andere Raumrichtungen bewegt werden kann. Bei diesem Beispiel handelt es sich um ein passives, globales Positioniersystem.

In einer weiteren Ausführungsform des erfindungsgemäßen haptischen Systems kann die Berührung des virtuellen Objekts auch seitlich erfolgen. Sind die fingerbezogenen Positionierelemente verschiebbar und/oder rotierbar, so können die mitführbaren Ausschnitte des Interaktionsbereichs wie ein Knopf oder kleine Kugel angefasst werden, d.h. man umschließt das Objekt mit den Fingern und/oder dem Handteller seitlich. Damit kann bspw. eine Anwendung ermöglicht werden, bei der das virtuelle Objekt eine aktive technische Funktion erfüllt (z.B. Joystick bei Bagger o.ä.).

In dieser Ausführungsform sind die Elemente so verschiebbar, dass zumindest ihr Mittelpunkt oder ihre Flächennormale mit dem Mittelpunkt oder der Flächennormale der virtuellen Fläche, bevorzugt ihr Mittelpunkt und ihre Flächennormale mit dem Mittelpunkt und der Flächennormale der virtuellen Fläche, übereinstimmt. Die virtuelle Fläche bezeichnet dabei den erkundbaren Ausschnitt der darzustellenden Oberfläche des virtuellen Objekts. In dem Fall, dass das globale Positioniersystem als Verschiebung der virtuellen Welt ausgebildet ist, ist es ausreichend, dass nur die Flächennormale der mitführbaren Ausschnitte des Interaktionsbereichs mit der Flächennormale der virtuellen Fläche übereinstimmt.

In einer weiteren Ausführungsform des erfindungsgemäßen haptischen Systems umfasst die Sensorik, die zur Erfassung der Position der mitführbaren Ausschnitte des Interaktionsbereichs verwendet wird, Mikroschalter mit diskreten Schaltpunkten oder Encoder oder resistive Messelemente, z. B. Potentiometer, oder optische Messelemente, z. B. zur Durchführung von Laser-Triangulation, oder kapazitive Messelemente oder induktive Messelemente oder eine Kombination aus den Vorgenannten. Zur Erfassung der Kontaktkräfte zwischen den mitführbaren Ausschnitten des Interaktionsbereichs und den Fingerkuppen der Nutzerhand werden ein- oder mehrdimensionale Kraft- und/oder Drehmomentsensoren eingesetzt.

In einer weiteren Ausführungsform des erfindungsgemäßen haptischen Systems umfasst das globale Positioniersystem Mittel zur linearen Verschiebung und/oder zur Rotation des fingerbezogenen Positioniersystems.

In einer Ausgestaltung dieser Ausführungsform umfassen diese Mittel eine linear verschiebbare Einheit, insbesondere mit zwei translatorischen Freiheitsgraden der Bewegung, oder einen Roboterarm, insbesondere mit sechs, also drei translatorischen und drei rotatorischen, Freiheitsgraden der Bewegung, oder einen Hexapod, insbesondere mit sechs Freiheitsgraden der Bewegung, oder eine Hub-Dreh-Anordnung oder eine Kombination aus den Vorgenannten, wobei insbesondere die Hub-Dreh-Anordnung mit der linear verschiebbaren Einheit zu einem Mittel mit sechs Freiheitsgraden der Bewegung kombiniert werden kann.

Erfindungsgemäß umfasst das fingerbezogene Positioniersystem mindestens eine Linearachse für jedes fingerbezogene Positionierelement, mittels derer jeweils ein mitführbarer Ausschnitt des Interaktionsbereichs in einer Achsrichtung verschiebbar ist und/oder, bei Verwendung von mehr als einer Linearachse, insbesondere von drei Linearachsen, ein Neigungswinkel des fingerbezogenen Positionierelements gegenüber der Basisbezugsfläche und/oder des mitführbaren Ausschnitts des Interaktionsbereichs gegenüber der Basisbezugsfläche einstellbar ist. Als "Linearachse" wird dabei eine lineare Führung mit Antrieb und der Fähigkeit, eine definierte Position einzunehmen, bezeichnet. Die Position der Linearachse kann durch eine Steuerung eingestellt und mittels der Sensorik der Ausgabeeinheit erfasst werden. Dies ermöglicht eine Regelung.

In Ausgestaltungen dieser Ausführungsform des erfindungsgemäßen haptischen Systems umfasst die Linearachse einen Zahnriemen-Antrieb oder einen Spindel-Antrieb oder einen Linearmotor oder einen Ultraschall-Piezomotor oder ein Element mit einer Form-Gedächtnis-Legierung oder eine Kombination aus den Vorgenannten.

In weiteren Ausgestaltungen dieser Ausführungsform des erfindungsgemäßen haptischen Systems weist die Ausgabeeinheit Sensorik zur Erfassung des Neigungswinkels des fingerbezogenen Positionierelements und/oder des mitführbaren Ausschnitts des Interaktionsbereichs gegenüber der Basisbezugsfläche auf. Die sensorische Erfassung kann beispielsweise direkt mittels Winkelgebern oder indirekt mittels Kraftsensoren oder FederElementen oder durch eine Kombination von linearen Entfernungssensoren mit einem Gelenk erfolgen.

Das erfindungsgemäße System kann weiterhin Auflageflächen für weitere Bereiche der Hand, bspw. den Handballen, aufweisen. Diese dienen der Verbesserung der Handhaltung unter ergonomischen Gesichtspunkten, wodurch bspw. die Dauer der ununterbrochenen Nutzung des Systems durch einen Nutzer verlängerbar ist. Auch diese Auflageflächen sind vorzugsweise mit Positionierelementen versehen, so dass eine ergonomische Handhaltung auch bei Änderung der Position der mitführbaren Ausschnitte beibehalten werden kann.

Das erfindungsgemäße System kann nicht nur zur haptischen Interaktion mit virtuellen Objekten, sondern an jedem beliebigen haptischen Arbeitsplatz eingesetzt werden. Darüber hinaus kann es auch mit einem oder mehreren anderen Systemen gekoppelt werden, z.B. für medizinische Anwendungen mit Manipulatoren.

Das erfindungsgemäße Verfahren zur haptischen Interaktion mit virtuellen Objekten unter Nutzung des erfindungsgemäßen Systems weist in unterschiedlichen Betriebsmodi unterschiedliche Verfahrensschritte auf.

Ein erster Betriebsmodus ist dadurch gekennzeichnet, dass zwischen mindestens einem der mitführbaren Ausschnitte und der diesem Ausschnitt zugeordneten Fingerkuppe kein Kontakt besteht. In diesem Fall ist noch keine haptische Interaktion mit dem virtuellen Objekt möglich. Um den Kontakt zwischen dem mitführbaren Ausschnitt und der Fingerkuppe herzustellen, wird kontaktlos die Position und die Bewegung der Nutzerhand im Raum in Bezug auf die Position des mitführbaren Ausschnittes ermittelt. Dies kann bspw. optisch, d.h. unter Nutzung von sichtbarem Licht, mit Infrarot oder mit Ultraschall geschehen. Anschließend wird ein Zielpunkt für jeden mitführbaren Ausschnitt, für den kein Kontakt zwischen der entsprechenden Fingerkuppe und dem mitführbaren Ausschnitt besteht, auf dem virtuellen Objekt visualisiert. Das heißt, dem Nutzer wird auf dem virtuellen Objekt, welches ihm bereits durch die Visualisierungseinheit dargestellt wird, ein Zielpunkt für jede Fingerkuppe, die noch nicht mit dem ihr zugeordneten mitführbaren Ausschnitt in Kontakt steht, angezeigt. Dieser Zielpunkt entspricht einer realen Position des mitführbaren Ausschnitts in Bezug auf die Nutzerhand. Anhand des Zielpunktes kann der Nutzer seine Hand, welche ebenfalls durch die Visualisierungseinheit dargestellt wird, zielgerichtet zur Position des mitführbaren Ausschnitts führen und so den Kontakt zwischen der Fingerkuppe und dem mitführbaren Ausschnitt herstellen. Alternativ oder zusätzlich zur Visualisierung wird der mitführbare Ausschnitt, für den kein Kontakt zwischen der entsprechenden Fingerkuppe und dem mitführbaren Ausschnitt besteht, zu einem aus der Position und der Bewegung der Nutzerhand sowie der Position des mitführbaren Ausschnittes berechneten Kollisionspunkt mit der Oberfläche des virtuellen Objekts verfahren. Dabei wird eine gleichbleibende Bewegung der Nutzerhand im Raum vorausgesetzt. Selbstverständlich kann aber die Position und Bewegung der Nutzerhand auch ständig neu bestimmt und der Kollisionspunkt entsprechend angepasst werden. Zum Verfahren des mitführbaren Ausschnitts können das globale Positionierungssystem, die fingerbezogenen Positionierelemente sowie die Justageelemente genutzt werden. Im Ergebnis treffen die Fingerkuppe und der zugeordnete mitführbare Ausschnitt aufeinander und ein Kontakt wird an der virtuellen Objektoberfläche hergestellt. Dabei sind die Justageelemente nur für die Anpassung an verschiedene Handgrößen vorgesehen und werden pro Nutzer einmalig eingestellt. Eine automatisierte Anpassung der Justageelemente über Sensorik und Aktorik, d.h. eine Selbstadaption wie oben beschrieben, ist möglich.

Ein zweiter Betriebsmodus ist dadurch gekennzeichnet, dass zwischen jedem der mitführbaren Ausschnitte und der diesen zugeordneten Fingerkuppen ein Kontakt besteht. In diesem Fall wird die Bewegung der Nutzerhand in Bezug auf das virtuelle Objekt aus der Bewegung der Fingerkuppen auf den mitführbaren Ausschnitten und/oder aus einer Kraftwirkung der Fingerkuppen auf die mitführbaren Ausschnitte berechnet. Im Ergebnis können über die Aktorik mit Hilfe der mitführbaren Ausschnitte haptische Eindrücke des virtuellen Objekts in der Nutzerhand erzeugt werden. Dies erfolgt mittels Positionierung der mitführbaren Ausschnitte des Interaktionsbereichs, Ausübung von Kontaktkräften auf die Fingerkuppen durch die mitführbaren Ausschnitte und/oder das Ändern einer oder mehrerer taktiler Eigenschaften der mitführbaren Ausschnitte, wie z.B. Kontur, Textur, Vibrationsart, Vibrationsstärke, Temperatur und Elastizität.

Die Datenverarbeitungseinheit des haptischen Systems schaltet dabei zwischen den beiden Betriebsmodi um, sobald die jeweiligen Bedingungen erfüllt sind.

Weitere Verfahrensschritte, wie bspw. das Visualisieren des virtuellen Objekts und der Nutzerhand in der bzw. durch die Visualisierungseinheit, die Datenverarbeitung von Eingabedaten und die Steuerung der Visualisierungseinheit und der Ausgabeeinheit, sind aus dem Stand der Technik bekannt und werden hier nicht gesondert beschrieben, obwohl sie selbstverständlich Teil des Verfahrens zur haptischen Interaktion sind. Auch die Justage der Ausgabeeinheit an die Größe der Nutzerhand ist ein bekannter Verfahrensschritt.

In einem weiteren Aspekt wird die bereits beschriebene erfindungsgemäße haptische Ausgabeeinheit in einem System zur Informationsvermittlung für Blinde und Sehbehinderte eingesetzt. Ein solches System beinhaltet eine haptische Ausgabeeinheit zur Wiedergabe haptischer Eindrücke auf Fingerkuppen der Nutzerhand und eine Datenverarbeitungseinheit zur Verarbeitung von Eingabedaten und zur Steuerung der haptischen Ausgabeeinheit. Dabei ist eine zu vermittelnde Information durch ortsabhängig veränderliche Eigenschaften charakterisiert, die haptisch mittels der haptischen Ausgabeeinheit in einem Interaktionsbereich nachgebildet werden. Solch eine Information kann bspw. ein Buchstabe, eine Ziffer, ein Zeichen, eine Grafik, ein Icon oder ein virtueller Körper oder eine Kombination aus mehreren davon sein. Die zu vermittelnden Informationen können real vorliegen, z.B. ausgedruckt auf einem Papier oder angezeigt an einem Bildschirm, oder nur virtuell in Form von Daten, z.B. in einem Speicher oder einer Software. Buchstaben, Ziffern und Zeichen können dabei jeweils in normaler oder in Braille-Darstellung vorliegen.

Dabei weist die haptische Ausgabeeinheit einen Rahmen, mindestens einen mitführbaren Ausschnitt des Interaktionsbereichs und ein fingerbezogenes Positioniersystem sowie eine Sensorik und eine Aktorik auf. Der Rahmen begrenzt den Interaktionsbereich, welcher sich in einer ersten Richtung und einer zweiten Richtung, die senkrecht zur ersten Richtung verläuft, erstreckt. Jeder mitführbare Ausschnitt des Interaktionsbereichs ist als Tastfläche ausgebildet und genau einer Fingerkuppe der Nutzerhand zugeordnet und kann von dieser in dem Interaktionsbereich entlang der ersten und/oder der zweiten Richtung bewegt werden. Dabei ist die Position der Fingerkuppe auf dem mitführbaren Ausschnitt veränderbar, da die Fingerkuppe nur auf dem mitführbaren Ausschnitt aufliegt und nicht durch mechanische Hilfsmittel gehalten wird. Das fingerbezogene Positioniersystem enthält mindestens ein fingerbezogenes Positionierelement, wobei jedes fingerbezogene Positionierelement genau einem mitführbaren Ausschnitt des Interaktionsbereichs zugeordnet ist und das fingerbezogene Positionierelement und der ihm zugeordnete, mitführbare Ausschnitt des Interaktionsbereichs in Wirkverbindung stehen. Die Sensorik dient zumindest der Erfassung der Position der mitführbaren Ausschnitte des Interaktionsbereichs innerhalb des Interaktionsbereichs, während die Aktorik geeignet ist, den haptischen Eindruck der mitführbaren Ausschnitte des Interaktionsbereichs entsprechend der Eigenschaften der Information zu gestalten.

Das System zur Informationsvermittlung für Blinde und Sehbehinderte ist dadurch gekennzeichnet, dass jedes fingerbezogene Positionierelement geeignet ist, den jeweiligen mitführbaren Ausschnitt entlang einer dritten Richtung zu bewegen. wobei die dritte Richtung jeweils senkrecht zur ersten und zur zweiten Richtung verläuft, und die Aktorik geeignet ist, die mitführbaren Ausschnitte des Interaktionsbereichs entsprechend der Eigenschaften der Information zu positionieren und Kontaktkräfte auf die Fingerkuppen der Nutzerhand mittels der mitführbaren Ausschnitte des Interaktionsbereichs auszuüben. Dabei ist der haptischen Ausgabeeinheit eine Basisbezugsfläche für die Kraftrückkopplung zugewiesen. Damit können Informationen durch die Nutzung der dritten Dimension für die gesamte Fingerkuppe einer Nutzerhand genauer dargestellt werden, als dies mit den bisher üblichen Hubelementen einer Braille-Zelle möglich ist, oder die räumlichen Konturen von nur virtuell vorliegenden Körpern oder 3-D-Darstellungen auch für Blinde und Sehbehinderte vermittelt werden.

In Ausführungsformen des Systems zur Informationsvermittlung für Blinde und Sehbehinderte weist jeder mitführbare Ausschnitt des Interaktionsbereichs mehrere stiftförmige Hubelemente auf. Die Aktorik ist dabei geeignet, die Hubelemente des jeweiligen mitführbaren Ausschnitts so zu steuern, dass diese ein ertastbares Relief auf der Oberfläche des mitführbaren Ausschnitts erzeugen. Damit können Konturen oder Oberflächeneigenschaften eines virtuellen Körpers, wie Rauheit, noch besser dargestellt werden. Alternativ oder zusätzlich kann mit den Hubelementen auch eine Braille-Zelle realisiert werden, so dass weitere Informationen an den Nutzer übermittelt werden können.

In weiteren Ausführungsformen des Systems zur Informationsvermittlung für Blinde und Sehbehinderte enthält jeder mitführbare Ausschnitt und/oder jedes fingerbezogene Positionierelement weiterhin einen Detektor, der geeignet ist, eine Eingabe des Nutzers zu detektieren. Solch ein Detektor kann beispielsweise ein Drucksensor sein, der bei einem definierten Druck des Nutzerfingers auf den mitführbaren Ausschnitt ein Signal auslöst. So können bspw. dargestellte Icons angeklickt oder Befehle bestätigt werden, ohne dass der Nutzer seine Hand von dem mitführbaren Ausschnitt wegbewegen muss.

Die Erfindung wird im Folgenden durch Ausführungsbeispiele anhand von Figuren erläutert, ohne auf diese beschränkt zu sein.

Dabei zeigen die
Fig. 1a eine haptische Ausgabeeinheit eines erfindungsgemäßen haptischen Systems;
Fig. 1b eine schematische Draufsicht auf eine Nutzerhand und die Ausschnitte des Interaktionsbereichs der haptischen Ausgabeeinheit aus Fig. 1a;
Fig. 1c eine schematische Draufsicht auf eine Nutzerhand und einen Interaktionsbereich eines statischen haptischen Systems aus dem Stand der Technik;
Fig. 2 die Erkundung einer virtuellen Fläche mittels eines Teils einer haptischen Ausgabeeinheit;
Fig. 3a bis 3d Ausführungsbeispiele für das globale Positioniersystem einer haptischen Ausgabeeinheit;
Fig. 4a und 4b Ausführungsbeispiele für die Positionierelemente des fingerbezogenen Positioniersystems einer haptischen Ausgabeeinheit;
Fig. 5 das erfindungsgemäße haptische System als Blockschaltbild;
Fig. 6a und 6b Schritte des Verfahrens zur haptischen Interaktion in einem ersten und einem zweiten Betriebsmodus;
Fig. 7 den zeitlichen Verlauf eines Verfahrens zur Kontaktpunktherstellung im ersten Betriebsmodus;
Fig. 8 eine schematische Darstellung der Elemente eines Systems zur Informationsvermittlung für Blinde und Sehbehinderte in einer Ausführungsform und
Fig. 9 eine schematische Darstellung einiger Elemente der haptischen Ausgabeeinheit des Systems zur Informationsvermittlung für Blinde und Sehbehinderte aus Figur 8.

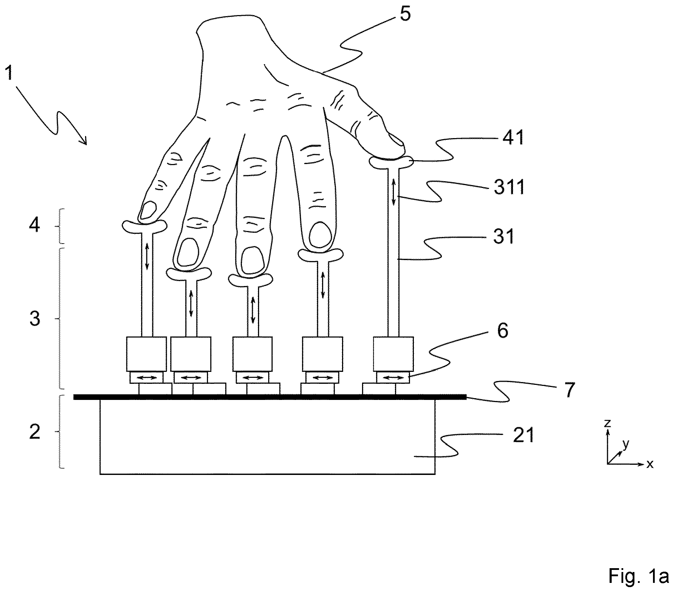

Fig. 1a zeigt skizzenhaft ein Ausführungsbeispiel einer haptischen Ausgabeeinheit 1 eines erfindungsgemäßen haptischen Systems, wobei die zu dem haptischen System gehörende Visualisierungseinheit und Datenverarbeitungseinheit nicht dargestellt sind.

Die haptische Ausgabeeinheit 1 kann in eine untere Schicht 2, eine mittlere Schicht 3 und eine obere Schicht 4 eingeteilt werden. Die untere Schicht 2 umfasst das globale Positioniersystem 21. Die mittlere Schicht 3 umfasst ein fingerbezogenes Positioniersystem mit fünf fingerbezogenen Positionierelementen 31. Die obere Schicht 4 umfasst Tastflächen 41, die mitführbare Ausschnitte eines Interaktionsbereichs der haptischen Ausgabeeinheit 1 darstellen, welche die zu erkundende virtuelle Fläche (nicht dargestellt) wiedergibt. Jede der fünf Tastflächen 41 ist auf einem fingerbezogenen Positionierelement 31 angeordnet. Jeweils eine Fingerkuppe einer Nutzerhand 5 liegt auf einer Tastfläche 41 auf. Zur umfassenden Erkundung der virtuellen Fläche werden die fingerbezogenen Positionierelemente 31 mittels eines globalen Positioniersystems 21 bewegt, so dass die fingerbezogenen Positionierelemente 31 mitsamt der Tastflächen 41 jeweils verschiedene Ausschnitte des Interaktionsbereichs repräsentieren. Jedes fingerbezogene Positionierelement 31 verfügt im gezeigten Ausführungsbeispiel über eine Linearachse 311, mittels derer die lokale Position der Tastfläche 41 bezüglich der virtuellen Fläche steuer- und regelbar ist und die eine Kraftrückkopplung auf den jeweiligen Finger der Nutzerhand 5 bewirkt, im Beispiel mit einem Freiheitsgrad in z-Richtung (angedeutet durch den Doppelpfeil). Erweiterte Systeme ermöglichen eine Kraftrückkopplung und Bewegung in alle kartesische Raumrichtungen und eine Rotation um selbige.

Der Abstand der fingerbezogenen Positionierelemente 31 und damit der Tastflächen 41 zueinander kann mittels Justageelementen 6 verändert werden (angedeutet durch den Doppelpfeil in x-Richtung), um die Abmessungen des fingerbezogenen Positioniersystems auf die Größe der Nutzerhand 5 anzupassen, wobei jedes fingerbezogene Positionierelement 31 über ein Justageelement 6 verfügt. Die fingerbezogenen Positionierelemente 31 sind auf einer Basisbezugsfläche 7 angeordnet. Selbstverständlich ist eine Justage der Positionierelemente 31 nicht nur, wie dargestellt, in x-Richtung, sondern auch in y-Richtung und ggf. auch in z-Richtung möglich. Auch eine Rotation der Positionierelemente um genannte Raumachsen ist in weiteren Ausführungsformen möglich.

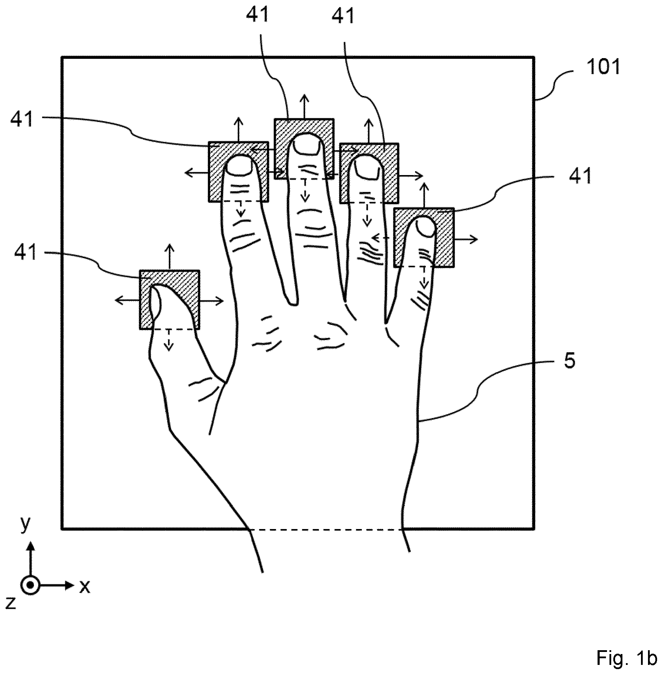

Fig. 1b verdeutlicht nochmals die Ausführung der Tastflächen 41 als Ausschnitte aus dem Interaktionsbereich 101 in einer Draufsicht auf die Nutzerhand 5 und die Tastflächen 41, wobei diese im dargestellten Ausführungsbeispiel zusätzlich zur z-Richtung auch in x- und y-Richtung frei innerhalb des Interaktionsbereichs 101 bewegbar sind. Der Interaktionsbereich 101 ist ein vorgegebener Raumbereich, der durch die räumlichen Grenzen der Bewegbarkeit des globalen Positioniersystems und der fingerbezogenen Positionierelemente definiert ist und in dem der Nutzer haptische und gegebenenfalls auch taktile Eindrücke der Eigenschaften des virtuellen Objekts erfahren kann. Jede der Tastflächen 41 ist dabei im Rahmen der Beweglichkeit der Nutzerhand 5 unabhängig von den anderen Tastflächen 41 in x- und y-Richtung bewegbar. Im einfachsten Fall jedoch sind die Abstände in x- und y-Richtung zwischen den einzelnen Tastflächen 41 nach der Justage auf die Größe der Nutzerhand 5 konstant, so dass alle Tastflächen 41 gleichartig in x- und/oder y-Richtung bewegt werden.

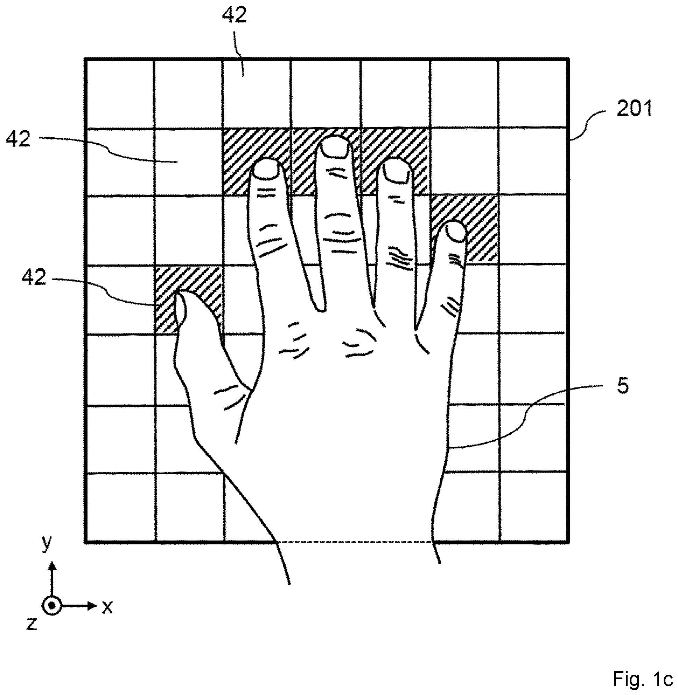

Fig. 1c zeigt im Vergleich einen Interaktionsbereich 201 eines statischen Systems zur haptischen Interaktion gemäß dem Stand der Technik. Dabei wird der Interaktionsbereich 201 durch ein Display mit in x- und y-Richtung ortsfesten Tastflächen 42 realisiert. Im Beispiel ist ein 7x7-Display dargestellt, bei dem insgesamt 49 Tastflächen 42 in sieben Zeilen und sieben Spalten angeordnet sind. Die Nutzerhand 5 bewegt sich im realen Raum im Interaktionsbereich 201 über die Tastflächen 42 hinweg, während sie sich im virtuellen Raum über die Oberfläche des virtuellen Objekts bewegt. Dabei wird durch die Einstellung der Höhe der Tastflächen 42 in z-Richtung und ggf. die Einstellung eines Kippwinkels der Tastflächen 42 die Oberfläche des virtuellen Objekts nachgebildet. Die Nutzerhand 5 berührt mit ihren Fingerkuppen jeweils nur einige der Tastflächen 42, welche in Fig. 1c schraffiert dargestellt sind. Für jede der Tastflächen 42 muss eine Aktorik zur Einstellung der Höhe der jeweiligen Tastfläche 42 sowie ggf. ihres Kippwinkels und ggf. zur Einstellung von Elementen, welche taktile Reize an die Fingerkuppen der Nutzerhand 5 übermitteln, vorhanden sein.

Demgegenüber ist für das erfindungsgemäße System 100 aus Fig. 1a und 1b nur eine geringere Anzahl von Aktoren, bspw. für jede Tastfläche 41 drei Aktoren zur Bewegung der jeweiligen Tastfläche 41 in x-, y- und z-Richtung sowie entsprechende Aktoren zur Bewegung des globalen Positioniersystems, notwendig. Die Komplexität des Systems wird damit deutlich verringert. Da die Anzahl der Aktoren für große Interaktionsbereiche bei statischen Systemen gemäß dem Stand der Technik, wie er in Fig. 1c beispielhaft dargestellt ist, stark ansteigt, während sie für das erfindungsgemäße System 100 konstant bleibt, können mit dem erfindungsgemäßen System mit geringem Aufwand wesentlich größere Interaktionsbereiche realisiert und damit größere virtuelle Objekte abgebildet werden.

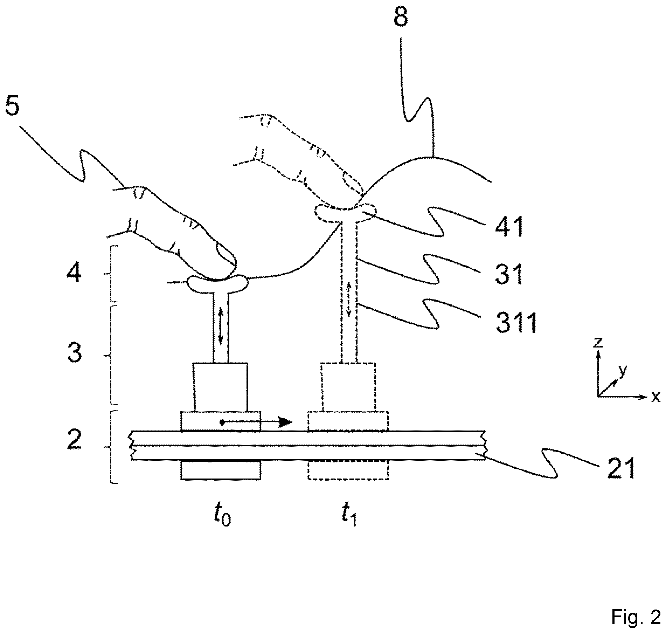

Fig. 2 zeigt skizzenhaft, wie mittels der Erfindung eine ortsabhängig veränderliche virtuelle Fläche haptisch erkundet werden kann. Dargestellt ist zur besseren Übersicht nur ein Teil einer haptischen Ausgabeeinheit eines erfindungsgemäßen haptischen Systems. Gezeigt ist der Teil der Ausgabeeinheit zum einen bei einem Zeitpunkt *t*₀, zu dem die Erkundung der im Profil dargestellten virtuellen Fläche 8 mit einem Finger einer Nutzerhand 5 gestartet wird, und zu einem späteren Zeitpunkt *t*₁, zu dem die Erkundung der virtuellen Fläche 8 fortgeschritten ist. Mittels des globalen Positioniersystems 21 wird das gezeigte fingerbezogene Positionierelement 31 mitsamt der Tastfläche 41 zwischen *t*₀ und *t*₁ in x-Richtung verschoben, um einen größeren Anteil der virtuellen Fläche 8 abzutasten als den durch die Tastfläche 41 repräsentierten. Da die virtuelle Fläche 8 zwischen *t*₀ und *t*₁ ihre Ausdehnung in z-Richtung ändert, wird die Tastfläche 41 mittels der Linearachse 311 des fingerbezogenen Positionierelements 31 in z-Richtung aufwärts bewegt, um dem Nutzer den Eindruck der Unebenheit zu vermitteln.

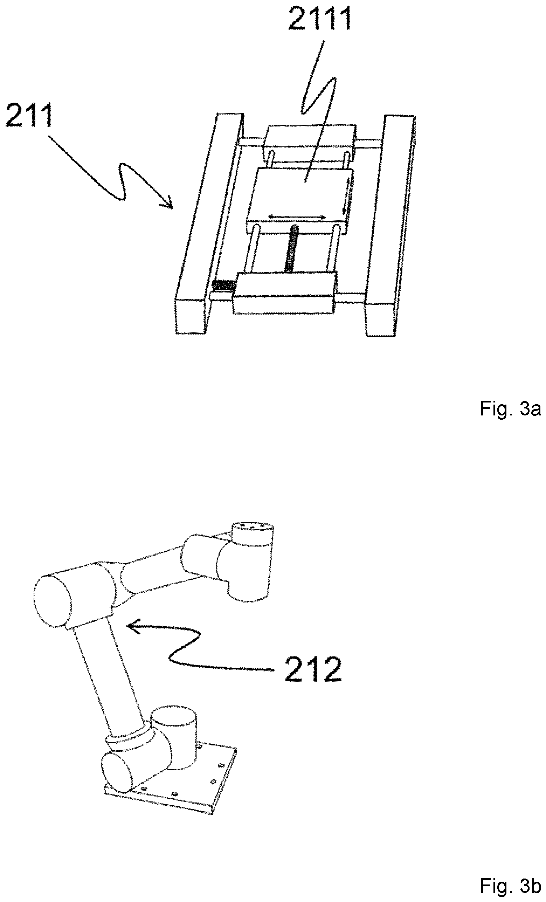

Die Fig. 3a bis 3d zeigen jeweils ein Ausführungsbeispiel bezüglich des globalen Positioniersystems einer haptischen Ausgabeeinheit eines erfindungsgemäßen haptischen Systems. Das globale Positioniersystem der Fig. 3a umfasst eine linear verschiebbare Einheit 211, wobei die Bewegung des Schlittens 2111 zwei translatorische Freiheitsgrade aufweist (durch Doppelpfeile angedeutet). Auf dem Schlitten 2111 ist das fingerbezogene Positioniersystem (nicht dargestellt) angeordnet.

In Fig. 3b ist ein Roboterarm 212 als Ausführungsbeispiel für das globale Positioniersystem gezeigt, mit dem bis zu sechs Freiheitsgrade der Bewegung realisiert werden können.

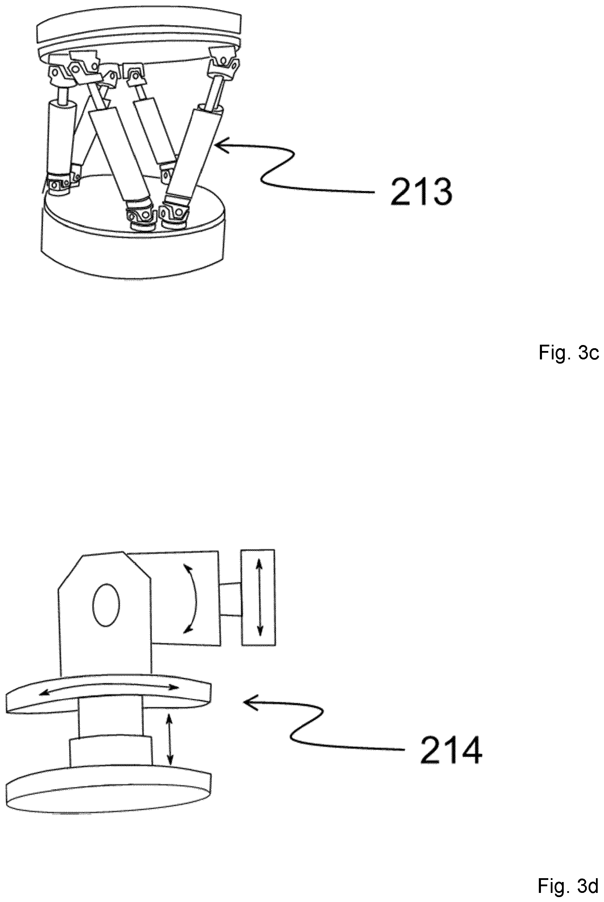

Fig. 3c zeigt einen Hexapod 213 als Ausführungsbeispiel für das globale Positioniersystem mit bis zu sechs Freiheitsgraden der Bewegung.

Fig. 3d zeigt eine Hub-Dreh-Anordnung 214 als Ausführungsbeispiel für das globale Positioniersystem, die zur Realisierung weiterer Freiheitsgrade der Bewegung auch vorteilhaft mit der linear verschiebbaren Einheit 211 aus Fig. 3a kombiniert werden kann.

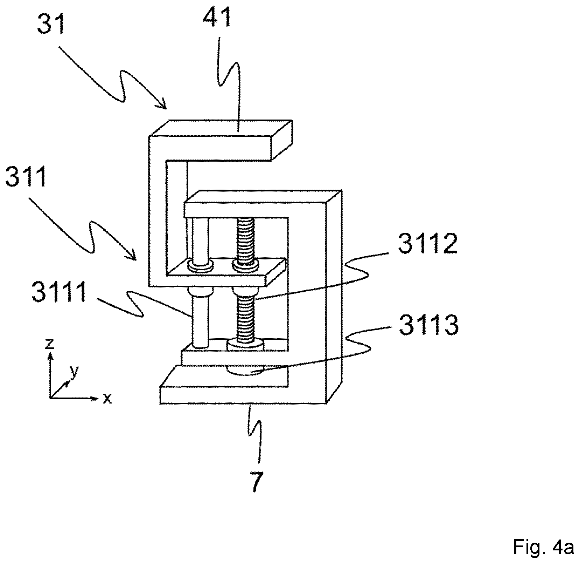

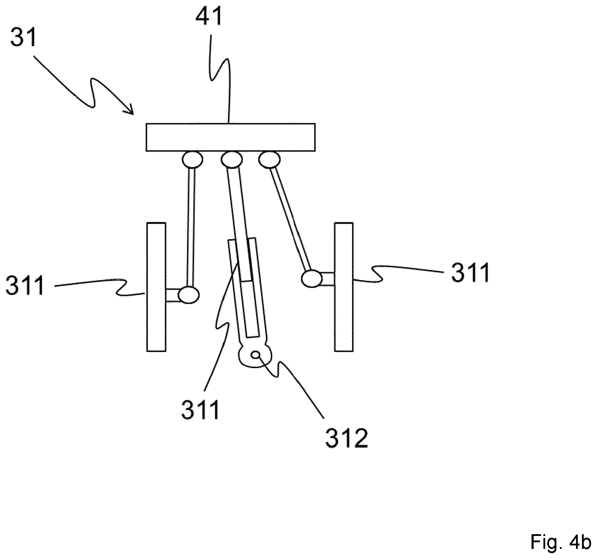

Die Fig. 4a und 4b zeigen jeweils ein Ausführungsbeispiel bezüglich eines fingerbezogenen Positionierelements einer haptischen Ausgabeeinheit eines erfindungsgemäßen haptischen Systems.

Fig. 4a zeigt ein technisch besonders einfaches fingerbezogenes Positionierelement 31 in Form einer Linearachse 311, mit der eine uniaxiale Verschiebung in z-Richtung zur lokalen Positionierung einer ebenen Tastfläche 41 und Kraftrückkopplung auf diese realisierbar ist. Die Linearachse 311 umfasst eine Linearführung 3111 mit Achse und Buchse und einen Spindelantrieb 3112 mit Spindel und Spindelmutter sowie einen Motor mit Encoder 3113, mit dem die exakte Position in z-Richtung erfasst wird. Die Fläche, mit der die Linearachse z. B. auf einem globalen Positioniersystem (nicht dargestellt) befestigt ist, dient als Basisbezugsfläche 7.

Fig. 4b zeigt ein technisch aufwändigeres Ausführungsbeispiel eines fingerbezogenen Positionierelements 31, bei dem die Position und Neigung der Tastfläche 41 mittels dreier Linearachsen 311 regel- und steuerbar sind. Die Bestimmung des Neigungswinkels der Tastfläche 41 erfolgt mit einem Winkelgeber 312.

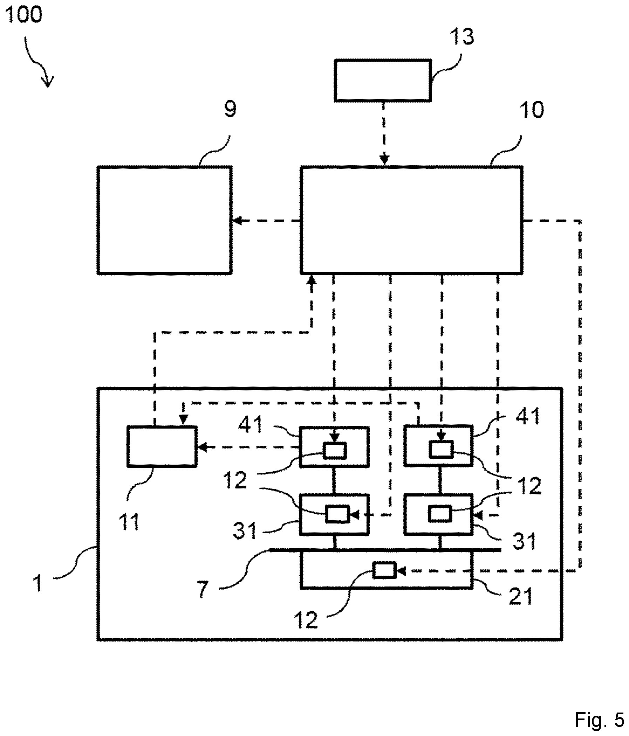

In Fig. 5 ist das haptische System 100 in einer ersten Ausführungsform schematisch als Blockschaltbild dargestellt. Das haptische System 100 umfasst neben der haptischen Ausgabeeinheit 1 eine Visualisierungseinheit 9 und eine Datenverarbeitungseinheit 10 sowie eine Positionssensorik 13 zur kontaktlosen Erfassung der räumlichen Position der Hand des Nutzers. Die Positionssensorik 13 ist außerhalb der Ausgabeeinheit 1 angeordnet. In der haptischen Ausgabeeinheit 1 sind das globale Positionierungssystem 21 und mindestens zwei mitführbare Tastflächen 41, die über fingerbezogene Positionierelemente 31 positioniert werden können, enthalten. Die Tastflächen 41, die fingerbezogenen Positionierelemente 31 und das globale Positionierungssystem 21 sind physisch fest miteinander verbunden, was durch die durchgehenden Verbindungslinien zwischen diesen Elementen veranschaulicht ist, können aber relativ zueinander bewegt werden. Die in Figur 1 dargestellte Basisbezugsfläche 7 ist ebenfalls dargestellt. Die haptische Ausgabeeinheit 1 weist darüber hinaus eine Sensorik 11 auf, die jeweils in den Tastflächen 41 angeordnete Elemente enthalten kann und/oder zwar den Tastflächen 41 jeweils zugeordnete Elemente aufweist, die jedoch von den Tastflächen 41 physisch beabstandet sind. So können bspw. auf visuellen, Infrarot- oder Ultraschall-Signalen basierende Sensorikelemente physisch getrennt von den Tastflächen 41 angeordnet sein. Die Sensorik 11 und die Positionssensorik 13 liefern Daten an die Datenverarbeitungseinheit 10, die mit einer gewünschten Bewegungsrichtung der Nutzerhand in Bezug auf das virtuelle Objekt oder mit einer Position und Bewegung der Nutzerhand im realen Raum in Beziehung stehen. Die von der Sensorik 11 und der Positionssensorik 13 gelieferten Daten werden zusammen mit bereits in der Datenverarbeitungseinheit 10 vorhandenen Objektdaten oder mit Objektdaten, die von außen der Datenverarbeitungseinheit 10 zugeführt werden, verarbeitet. Im Ergebnis wird die Visualisierungseinheit 9 mittels Steuersignalen von der Datenverarbeitungseinheit 10 zur Visualisierung des virtuellen Objekts und der Nutzerhand gesteuert. Daten- und/oder Steuerverbindungen können kabelgebunden oder nicht-kabelgebunden ausgeführt sein und sind in Fig. 5 durch gestrichelte Pfeile veranschaulicht. Darüber hinaus werden Elemente der Aktorik 12, die Bestandteil der haptischen Ausgabeeinheit 1 ist, derart von der Datenverarbeitungseinheit 10 gesteuert, dass ein taktiler Eindruck der Fläche des virtuellen Objekts, an der sich die Nutzerhand gerade befindet, an die Fingerkuppen der Nutzerhand durch die Tastflächen 41 und deren Position im realen Raum übermittelt wird. Dazu sind in Fig. 5 in jeder Tastfläche 41 und in jedem fingerbezogenen Positionierelement 31 Elemente der Aktorik 12 dargestellt. Auch das globale Positionierungssystem 21 enthält Elemente der Aktorik 12, die bspw. beim Erreichen eines Kollisionspunktes im ersten Betriebsmodus oder bei großräumigen Bewegungen der Nutzerhand zum Einsatz kommen. Die haptische Ausgabeeinheit 1 muss kein geschlossenes Gerät sein, dessen Elemente alle physisch miteinander verbunden sind, sondern kann aus mehreren Geräten bestehen, die jedoch funktionell die Aufgaben der haptischen Ausgabeeinheit 1 erfüllen.

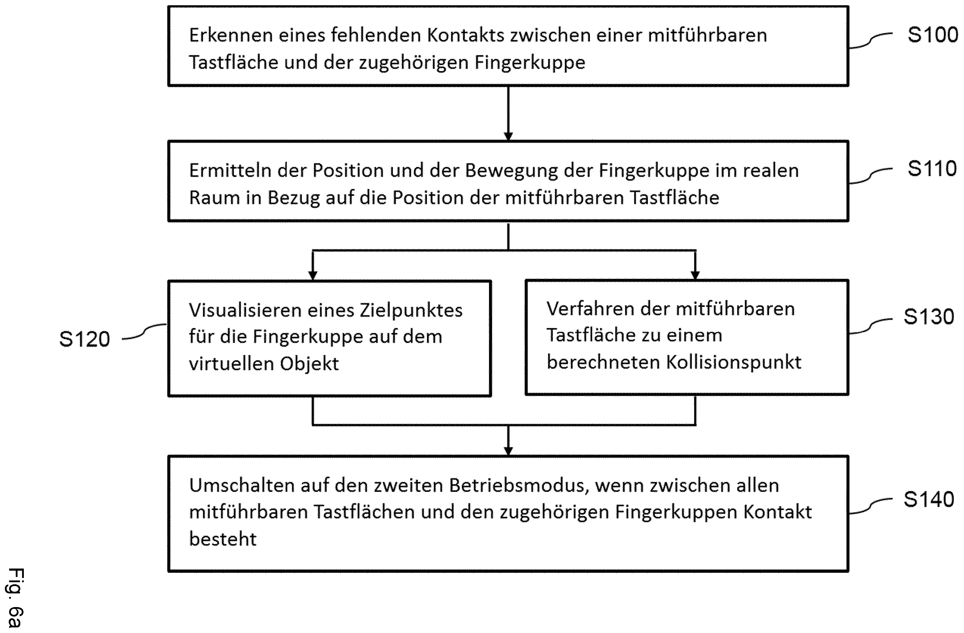

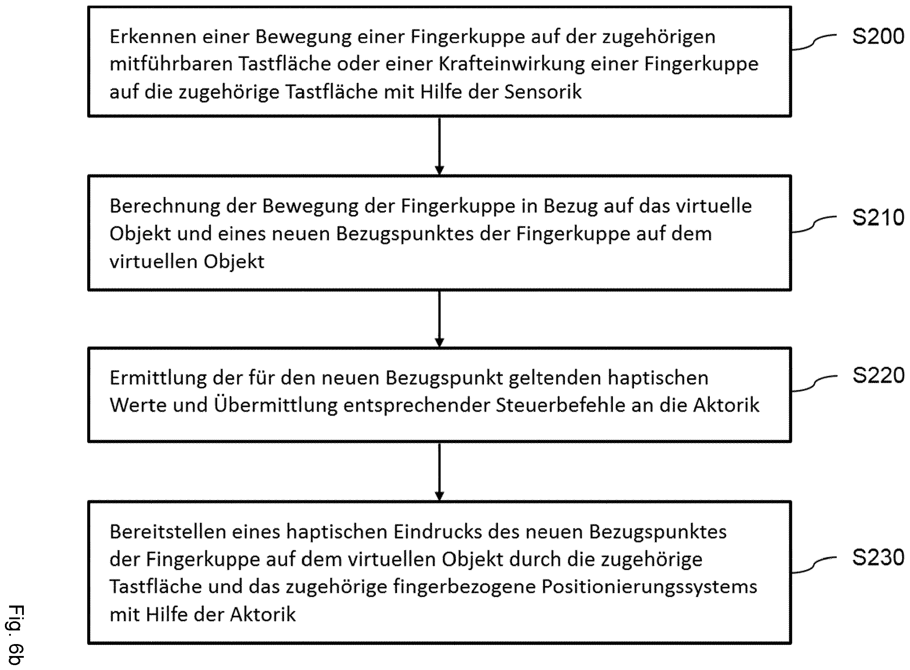

Die Figuren 6a und 6b zeigen einige Schritte des erfindungsgemäßen Verfahrens zur haptischen Interaktion mit einem virtuellen Objekt, wobei die beiden prinzipiellen Betriebsmodi (kein Kontakt mindestens einer Fingerkuppe mit der zugeordneten Tastfläche oder Kontakt aller Fingerkuppen mit den jeweils zugeordneten Tastflächen) betrachtet werden.

Fig. 6a zeigt Schritte des ersten Betriebsmodus, bei dem kein Kontakt mindestens einer Fingerkuppe mit der zugeordneten Tastfläche vorliegt, der Nutzer sich aber bereits im virtuellen Raum "befindet". In diesem Zustand soll es für den Nutzer möglich sein, ohne die Visualisierungseinheit, bspw. eine VR-Brille (Virtual Reality), abzunehmen und damit ohne Blickkontakt zu den Tastflächen der Ausgabeeinheit zu haben, alle Fingerkuppen exakt auf die zugehörigen Tastflächen abzulegen. Der fehlende Kontakt zwischen Fingerkuppe und Tastfläche wird in einem ersten Schritt S100 festgestellt, bspw. durch die Sensorik. Im nächsten Schritt wird die Position und die Bewegung der Fingerkuppe im realen Raum in Bezug auf die Position der zugeordneten mitführbaren Tastfläche ermittelt (S110). Auch dazu kann die Sensorik der Ausgabeeinheit oder eine andere Sensorik, bspw. die Positionssensorik, genutzt werden. Im Allgemeinen werden die Position und die Bewegung der gesamten Nutzerhand ermittelt, aus denen die Position und Bewegung der entsprechenden Fingerkuppe extrapoliert werden kann. In einem folgenden Schritt wird entweder ein Zielpunkt für die Fingerkuppe auf dem virtuellen Objekt durch die Visualisierungseinheit dem Nutzer visualisiert (S120) oder die mitführbare Tastfläche wird zu einem aus der bekannten Position und Bewegung der Nutzerhand und der bekannten Position der Tastfläche im realen Raum berechneten Kollisionspunkt verfahren (S130). Beide Schritte können auch zeitgleich oder nacheinander ausgeführt werden. Sobald ein Kontakt zwischen allen Fingerkuppen und der jeweils zugehörigen Tastfläche besteht, d.h. durch die Sensorik erkannt wird, wird auf den zweiten Betriebsmodus umgeschaltet (S140).

Fig. 6b zeigt Schritte des zweiten Betriebsmodus, bei dem Kontakt zwischen allen Fingerkuppen mit der jeweils zugeordneten Tastfläche vorliegt. Dies ist der eigentliche Betriebsmodus des haptischen Systems, in welchem der Nutzer haptische Eindrücke des virtuellen Objekts, welches ihm von der Visualisierungseinheit visualisiert wird, erhält und dabei seine Finger bzw. seine Hand frei über das virtuelle Objekt hinwegbewegen kann. Dabei wird eine gewünschte Bewegung der Hand über das virtuelle Objekt von einem ersten Bezugspunkt der Fingerkuppe aus durch eine Bewegung der Fingerkuppe auf der zugehörigen Tastfläche oder durch eine Verschiebung der Tastfläche innerhalb des Interaktionsbereichs durch eine Krafteinwirkung der Nutzerhand auf die Tastfläche "vollzogen". Wird eine solche Bewegung der Fingerkuppe auf der zugehörigen Tastfläche oder eine Krafteinwirkung der Nutzerhand auf die Tastfläche mit Hilfe der Sensorik erkannt (Schritt S200), so wird von der Datenverarbeitungseinheit die Bewegung der Fingerkuppe in Bezug auf das virtuelle Objekt berechnet und ein neuer Bezugspunkt der Fingerkuppe auf dem virtuellen Objekt ermittelt (S210) Für diesen neuen Bezugspunkt werden anschließend durch die Datenverarbeitungseinheit geltende haptische Werte ermittelt, z.B. aus einer Datenbank abgerufen, und entsprechende Steuerbefehle an die Aktorik der Ausgabeeinheit übermittelt (S220). Die in der zugehörigen Tastfläche und dem fingerbezogenen Positionierungssystem vorhandene Aktorik stellt dann durch entsprechende Einstellungen der Position der Tastfläche, von Kontur, Textur, Vibrationsart, Vibrationsstärke, Temperatur und/oder Elastizität der Tastfläche der Fingerkuppe einen dem neuen Bezugspunkt auf dem virtuellen Objekt entsprechenden haptischen Eindruck sowie taktilen Eindruck zur Verfügung (S230).

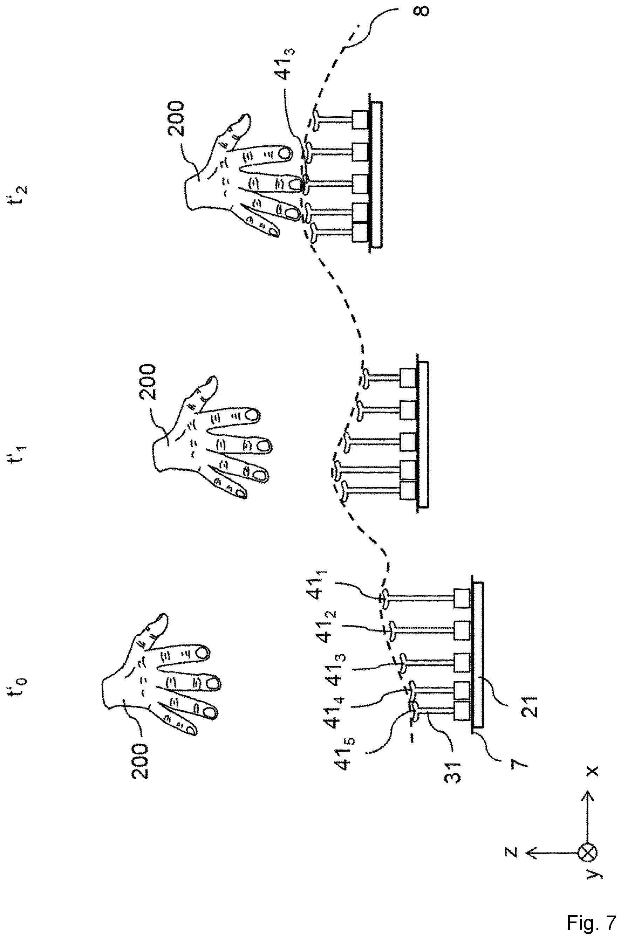

Mit Bezug auf Figur 7 wird eine Ausgestaltung des Verfahrens zum Herstellen eines Kontaktes zwischen der Nutzerhand und der haptischen Ausgabeeinheit im ersten Betriebsmodus, bei der die Tastflächen zu einem berechneten Kollisionspunkt verfahren werden, näher erläutert. Dazu ist zur besseren Übersicht nur ein Teil einer haptischen Ausgabeeinheit eines erfindungsgemäßen haptischen Systems dargestellt. Die Figur 7 zeigt skizzenhaft das globale Positioniersystem 21, die Bezugsfläche 7, fünf fingerbezogene Positionierelemente 31 der haptischen Ausgabeeinheit mit den jeweils zugehörigen Tastflächen 41₁ bis 41s und eine Nutzerhand 200 zu verschiedenen Zeitpunkten des ersten Betriebsmodus.

Zum Zeitpunkt t'₀ ist die Nutzerhand 200 noch sehr weit räumlich von der haptischen Ausgabeeinheit entfernt, wobei gleichzeitig die fingerbezogenen Positionierelemente 31 mit ihren dazugehörigen Tastflächen 41₁ bis 41s gemäß der virtuellen Fläche 8 des virtuellen Objektes, d.h. der Oberflächenform des virtuellen Objektes, an der Stelle der virtuellen Projektion der Nutzerhand positioniert sind. Unter virtueller Projektion der Nutzerhand ist die virtuelle Abbildung der Nutzerhand mittels paralleler Bezugslinien auf die virtuelle Fläche 8 gemeint. Dazu ist es notwendig, die Position der Nutzerhand 200 im realen Raum zu erfassen und auf den virtuellen Raum zu übertragen. Die virtuelle Fläche 8 ist durch die gestrichelte Linie dargestellt. Zum Zeitpunkt t'₀ befindet sich die Nutzerhand 200 (bezogen auf einen Bezugspunkt, z.B. der Mittelpunkt des Handtellers) an einem ersten Punkt im Raum, der durch die Koordinaten (x₂₀₀₀, y₂₀₀₀, z₂₀₀₀) im x-y-z-Koordinatensystem gekennzeichnet ist. Die Tastflächen 41₁ bis 41₅ befinden sich im selben Raum jeweils an einem ersten Punkt, der durch die Koordinaten (xᵢ₀, yᵢ₀, zᵢ₀) mit i = 1 bis 5 gekennzeichnet ist. Dabei ist die Tastfläche 41₁ dem Daumen der Nutzerhand 200 zugeordnet, die Tastfläche 41₂ dem Zeigefinger der Nutzerhand 200 usw. Die Position der Tastflächen 41₁ bis 41s im Raum wird zum einen über die Position des globalen Positioniersystems 21 der haptischen Ausgabeeinheit als auch über die Position der fingerbezogenen Positionierelemente 31 bestimmt.

Bewegt sich nun die Nutzerhand 200 mit der Zeit weiter im Raum, so befindet sie sich zum Zeitpunkt t'₁ an einem zweiten Punkt im Raum, der durch die Koordinaten (x₂₀₀₁, y₂₀₀₁, z₂₀₀₁) gekennzeichnet ist. Die Tastflächen 41₁ bis 41₅ befinden sich nunmehr jeweils an einem zweiten Punkt, der durch die Koordinaten (xᵢ₁, yᵢ₁, zᵢ₁) mit i = 1 bis 5 gekennzeichnet ist und bilden die virtuelle Fläche 8 an der Projektionsstelle der Nutzerhand 200 zum Zeitpunkt t'₁ ab. Zu einem nochmals späteren Zeitpunkt t'₂ befindet sich die Nutzerhand 200 an einem dritten Punkt im Raum, der durch die Koordinaten (x₂₀₀₂, y₂₀₀₂, z₂₀₀₂) gekennzeichnet ist. Die Tastflächen 41₁ bis 41₅ befinden sich nunmehr jeweils an einem dritten Punkt, der durch die Koordinaten (xᵢ₂, yᵢ₂, zᵢ₂) mit i = 1 bis 5 gekennzeichnet ist und bilden die virtuelle Fläche 8 an der Projektionsstelle der Nutzerhand 200 zum Zeitpunkt t'₂ ab. Da sich die Nutzerhand im dargestellten Beispiel auch in x-und y-Richtung bewegt hat, kann die virtuelle Fläche 8, je nach Kontur des virtuellen Objektes, zu jedem Zeitpunkt eine andere Gestalt haben und sich auf einer anderen Höhe entlang der z-Achse befinden. Dies ist beispielhaft in Fig. 7 dargestellt. Große Höhenunterschiede der virtuellen Oberfläche werden dabei durch eine Verschiebung des globalen Positioniersystems 21 im Raum realisiert.

Für jeden Zeitpunkt des Verfahrens wird aus der Position und der Bewegung der Nutzerhand 200 sowie der Position der Tastflächen 41₁ bis 41s immer wieder ein Kollisionspunkt der Nutzerhand mit der Oberfläche des virtuellen Objekts berechnet und die Tastflächen 41₁ bis 41₅ zu diesem verfahren. Im Ergebnis treffen die Nutzerhand 200 und die haptische Ausgabeeinheit letztlich aufeinander und ein Kontakt wird an der virtuellen Fläche 8 hergestellt.

Wie zu sehen ist, verringert sich der Abstand zwischen der Nutzerhand 200 zu den Tastflächen 41₁ bis 41s mit der Zeit, wobei zum Zeitpunkt t'₂ zumindest für die Fingerkuppe des Mittelfingers ein Kontakt zur zugehörigen Tastfläche 41₃ hergestellt ist. Im Folgenden stellt sich der Kontakt der anderen Fingerkuppen der Nutzerhand mit den jeweils zugehörigen Tastflächen selbständig ein, wobei gegebenenfalls noch Anpassungen der relativen Abstände der Tastflächen 41₁ bis 41s zueinander entsprechend der Größe der Nutzerhand 200 vorzunehmen sind.

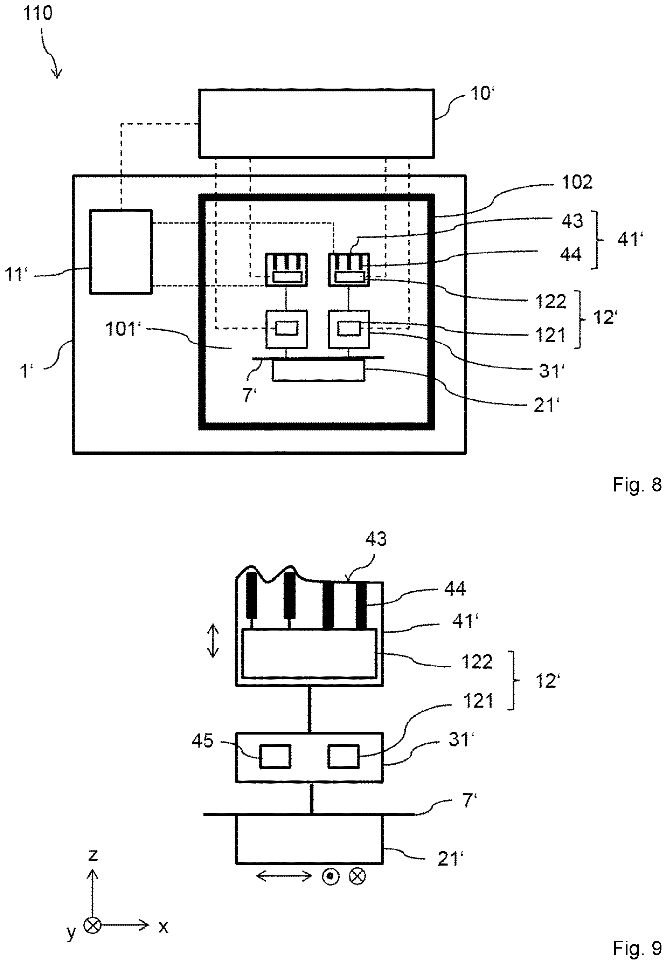

Figur 8 zeigt schematisch die Elemente eines Systems zur Informationsvermittlung für Blinde und Sehbehinderte in einer Ausführungsform 110, während Figur 9 einige Elemente der haptischen Ausgabeeinheit 1' dieser Ausführungsform 110 im Detail zeigt.

Das System 110 zur Informationsvermittlung für Blinde und Sehbehinderte umfasst eine haptische Ausgabeeinheit 1' und eine Datenverarbeitungseinheit 10'. Die haptische Ausgabeeinheit 1' weist einen Interaktionsbereich 101' auf, der durch einen Rahmen 102 in eine erste Richtung (x-Richtung in Fig. 9) und eine zweite Richtung (y-Richtung in Fig. 9) begrenzt ist, wobei die erste Richtung und die zweite Richtung senkrecht zueinander verlaufen. Die haptische Ausgabeeinheit 1' weist weiterhin zwei Tastflächen 41' auf, die mitführbare Ausschnitte des Interaktionsbereichs 101' darstellen, da sie innerhalb des Interaktionsbereichs 101` durch einen Nutzer mindestens entlang der ersten Richtung oder der zweiten Richtung bewegbar sind. Jede der Tastflächen 41' ist genau einer Fingerkuppe einer Hand des Nutzers zugeordnet. Dabei können verschiedene Tastflächen 41' auch Fingerkuppen verschiedener Hände des Nutzers zugeordnet sein. Jede Tastfläche 41' ist mit einem, dieser Tastfläche 41' zugeordneten fingerbezogenen Positionierelement 31' verbunden. Sind mehrere Tastflächen 41' Fingerkuppen ein und derselben Hand des Nutzers zugeordnet, so kann die Bewegung der einzelnen Tastflächen 41' zueinander in die erste und/oder die zweite Richtung unterbunden sein. Mit anderen Worten: In diesem Fall können die entsprechenden einzelnen Tastflächen 41' nur gemeinsam, d.h. in einem festen relativen Abstand zueinander, in die erste und/oder zweite Richtung bewegt werden. Dies ist im dargestellten Fall gegeben, da die beiden Tastflächen 41' in die erste und/oder zweite Richtung mit Hilfe eines gemeinsamen globalen Positioniersystems 21' bewegt werden können. Jedoch kann die Bewegung einer der Tastflächen 41' in die erste und/oder die zweite Richtung auch durch das dieser Tastfläche 41' zugeordnete fingerbezogene Positioniersystem 31' realisiert werden. Darüber hinaus kann die Bewegung der Tastflächen 41' in die erste und/oder zweite Richtung auch durch entsprechende Vorrichtungen, wie Gehemme oder Sperren, zeitlich befristet oder unbefristet begrenzt werden. Damit können bspw. rasterförmige Bewegungen der Tastflächen 41' zunächst nur entlang der ersten Richtung und erst nach Erreichen des Rahmens 102 entlang der zweiten Richtung vorgegeben werden. Vorzugsweise sind die Tastflächen 41' jedoch vollkommen frei in der ersten und der zweiten Richtung innerhalb des Interaktionsbereichs 101` bewegbar.

Darüber hinaus ist die Fingerkuppe des Nutzers auf der Tastfläche 41' veränderbar. Das heißt, die Fingerkuppe ist nicht mit mechanischen Hilfsmittel, wie Bändern, Klemmen, Kappen oder ähnlichen, an der Tastfläche 41' befestigt, sondern kann bspw. über die Tastfläche 41' in die erste und/oder zweite Richtung gerollt werden. Damit hat der Nutzer ein natürliches Gefühl bei der Nutzung der haptischen Ausgabeeinheit 1' und kann Feinheiten eines auf einer Fingerauflagefläche 43 der Tastfläche 41' erzeugten Reliefs besser erforschen.

Das fingerbezogene Positioniersystem 31' realisiert in jedem Fall die Bewegung der zugeordneten Tastfläche 41' in eine dritte Richtung (z-Richtung in Fig. 9), wobei die dritte Richtung senkrecht zur ersten Richtung und zur zweiten Richtung verläuft. Dabei wird die Bewegung der Tastfläche 41' entlang der dritten Richtung durch eine Höhenaktorik 121 gesteuert, die Teil einer Aktorik 12' der haptischen Ausgabeeinheit 1' ist. Um dem Nutzer eine Information über die Veränderung der Position der Tastfläche 41' entlang der dritten Richtung, also der Höhe der Tastfläche 41', zu vermitteln, werden über die Tastflächen 41' durch die Aktorik 12' Kontaktkräfte auf die Fingerkuppen der Nutzerhand ausgeübt. Dazu ist der haptischen Ausgabeeinheit 1' eine Basisbezugsfläche 7' zugewiesen, die eine Kraftrückkopplung erst ermöglicht.

Die Aktorik 12` weist neben der Höhenaktorik 121 auch eine Reliefaktorik 122 auf, die auf der Fingerauflagefläche 43 ein Relief oder andere haptische Eindrücke, wie Vibrationen, erzeugen kann. So weisen die Tastflächen 41` des System 110 zur Informationsvermittlung für Blinde und Sehbehinderte jeweils mehrere Hubelemente 44 auf, die ein solches Relief auf der Fingerauflagefläche 43 realisieren können. Dabei können die Hubelemente 44 einzelne Bereiche der Fingerauflagefläche 43 über eine Nullstellung hinaus anheben, wie in Fig. 9 dargestellt, oder können auch die Fingerauflagefläche 43 durchdringen, bspw. als Stifte. Sind die Hubelemente 44 entsprechend einer Braille-Zelle angeordnet, so können auch Buchstaben, Ziffern oder Zeichen in Braille-Schrift dargestellt werden.

Die haptische Ausgabeeinheit 1' weist darüber hinaus noch eine Sensorik 11' zur Erfassung der Position der Tastflächen 41' innerhalb des Interaktionsbereichs 101' auf. Anhand der von der Sensorik 11' an die Datenverarbeitungseinheit 10' übermittelten Position der Tastflächen 41' und der mittels der haptischen Ausgabeeinheit 1' zu vermittelnden Informationen steuert die Datenverarbeitungseinheit 10` die Aktorik 12' der haptischen Ausgabeeinheit 1' derart, dass jede Tastfläche 41' entsprechend der zu vermittelnden Information entlang der dritten Richtung durch das fingerbezogenen Positionierelement 31' positioniert wird und im dargestellten Ausführungsbeispiel gleichzeitig ein definiertes Relief auf der Fingerauflagefläche 43 erzeugt wird. Somit können bspw. der Informationsgehalt einer Computerbildschirmseite oder Informationen zu einem virtuellen Körper Blinden und Sehbehinderten vermittelt werden.

Die in Fig. 8 gestrichelt dargestellten Verbindunglinien zwischen den einzelnen Elementen des Systems 110 sind Daten- oder Signalleitungen, die zum drahtgebundenen oder drahtlosen Austausch von Daten oder Signalen oder zur hydraulischen, pneumatischen oder mechanischen Steuerung von Elementen dienen. Durchgängige Verbindunglinien stellen hingegen mechanisch feste und tragende Verbindungen dar.

In Fig. 9 ist neben den bereits beschriebenen Elementen noch ein Detektor 45 im fingerbezogenen Positioniersystem 31' dargestellt. Dieser Detektor 45 dient der Erfassung einer Eingabe des Nutzers, bspw. durch ein aktives Bewegen der Tastfläche 41' entlang der dritten Richtung (z-Richtung) in Richtung auf die Basisbezugsfläche 7`. Damit kann der Nutzer bspw. ein Icon oder einen Befehl auf einer mit Hilfe der haptischen Ausgabeeinheit 1' dargestellten Computerbildschirmseite auswählen und bestätigen.

Vorteilhaft müssen zur Darstellung einer Vielzahl von Informationen bzw. zur Darstellung einer sehr großflächigen Information nicht alle Informationen bzw. nicht alle Informationsteile gleichzeitig auf einer großen Interaktionsfläche dargestellt werden, sondern es werden jeweils nur die Informationen oder Informationsteile, welche der aktuellen Position der Tastflächen entsprechen, dargestellt. Das verringert sowohl den Aufwand zur Datenverarbeitung und Steuerung der Aktorik als auch die Anzahl der benötigten Aktoren innerhalb des Interaktionsbereichs drastisch. Damit sind sowohl schnellere als auch genauere Darstellungen von Informationen möglich. Darüber hinaus ermöglicht die Einbeziehung der dritten Richtung in die Darstellung der Informationen eine Verbesserung der Informationsvermittlung auch bei an sich ebenen, d.h. zweidimensionalen, Informationen (wie Buchstaben) und die Vermittlung von Informationen zu dreidimensionalen, jedoch nur virtuell vorliegenden Körpern.

Selbstverständlich ist die Anzahl der Tastflächen 41 und der Hubelemente 44 nicht auf die in den Figuren 8 und 9 gezeigte Anzahl beschränkt, sondern kann beliebig je nach Anwendungsfall ausgewählt werden. Auch andere Kombinationen von Elementen oder deren Eigenschaften sind möglich, solange sie sich nicht gegenseitig ausschließen.

### Bezugszeichen

- 1, 1': Haptische Ausgabeeinheit
- 2: Untere Schicht
- 21, 21': Globales Positioniersystem
- 211: Linear verschiebbare Einheit
- 2111: Schlitten
- 212: Roboterarm
- 213: Hexapod
- 214: Hub-Dreh-Anordnung
- 3: Mittlere Schicht
- 31, 31': Fingerbezogenes Positionierelement
- 311: Linearachse
- 3111: Linearführung
- 3112: Spindelantrieb
- 3113: Motor mit Encoder
- 312: Winkelgeber
- 4: Obere Schicht
- 41, 41, - 41₅, 41': Tastfläche (erfindungsgemäßes System)
- 42: Tastfläche (gemäß Stand der Technik)
- 43: Fingerauflagefläche
- 44: Hubelement
- 45: Detektor
- 5: Nutzerhand
- 6: Justageelement
- 7, 7`: Basisbezugsfläche
- 8: Virtuelle Fläche
- 9: Visualisierungseinheit
- 10, 10': Datenverarbeitungseinheit
- 11, 11': Sensorik
- 12, 12': Aktorik
- 13: Positionssensorik
- 100: System zur haptischen Interaktion
- 101, 101': Interaktionsbereich (erfindungsgemäßes System)
- 102: Rahmen
- 110: System zur Informationsvermittlung für Blinde und Sehbehinderte
- 121: Höhenaktorik
- 122: Reliefaktorik
- 201: Interaktionsbereich (gemäß Stand der Technik)

- *t*₀, *t*₁: Zeitpunkte der Erkundung einer virtuellen Fläche
- t'₀, t'₁, t'₂: Zeitpunkte beim Verfahren zur Herstellung des Kontaktes

## Patentansprüche

1. System (100) zur Immersion eines Nutzers in eine virtuelle Welt und zur haptischen Interaktion des Nutzers mit virtuellen Objekten, umfassend
- eine Visualisierungseinheit (9) zur Visualisierung virtueller Objekte und der Nutzerhand (5),
- eine haptische Ausgabeeinheit (1) zur Wiedergabe haptischer Eindrücke zumindest mittels Kraftrückkopplung auf Fingerkuppen der Nutzerhand (5),
- eine Datenverarbeitungseinheit (10) zur Verarbeitung von Eingabedaten und Steuerung der Visualisierungseinheit (9) und der haptischen Ausgabeeinheit (1),
wobei ein virtuelles Objekt durch ortsabhängig veränderliche haptische Eigenschaften charakterisiert ist, die mittels eines Interaktionsbereichs (101) nachgebildet werden,
**dadurch gekennzeichnet, dass** die haptische Ausgabeeinheit (1) aufweist:
- mindestens zwei mitführbare Ausschnitte (41) des Interaktionsbereichs (101), wobei die mitführbaren Ausschnitte (41) des Interaktionsbereichs (101) frei innerhalb des Interaktionsbereiches (101) beweglich und als Tastflächen ausgebildet sind und jeweils ein mitführbarer Ausschnitt (41) des Interaktionsbereichs (101) einer Fingerkuppe der Nutzerhand (5) zugeordnet ist und von dieser bewegt werden kann, wobei die Position der Fingerkuppe auf dem mitführbaren Ausschnitt (41) veränderbar ist und wobei jeder der mitführbaren Ausschnitte (41) des Interaktionsbereichs (101) im Rahmen der Beweglichkeit der Nutzerhand (5) unabhängig von den anderen mitführbaren Ausschnitten (41) des Interaktionsbereichs (101) in x- und y-Richtung bewegbar ist,
- ein fingerbezogenes Positioniersystem, umfassend mindestens zwei jeweils einem mitführbaren Ausschnitt (41) des Interaktionsbereichs (101) zugeordnete, fingerbezogene Positionierelemente (31), wobei die fingerbezogenen Positionierelemente (31) und der ihnen zugeordnete, mitführbare Ausschnitt (41) des Interaktionsbereichs (101) in Wirkverbindung stehen und wobei das fingerbezogene Positioniersystem mindestens eine motorisierte Linearachse (311) für jedes fingerbezogene Positionierelement (31) umfasst, mittels derer jeweils ein mitführbarer Ausschnitt (41) des Interaktionsbereichs (101) in einer z-Achsrichtung verschiebbar ist,
- ein globales Positioniersystem (21), mittels dessen das fingerbezogene Positioniersystem bewegbar ist oder das als eine Verschiebung der virtuellen Welt, in der das virtuelle Objekt angeordnet ist, ausgebildet ist,
wobei die haptische Ausgabeeinheit (1) des Weiteren umfasst:
- Sensorik (11) zumindest zur Erfassung der Position der mitführbaren Ausschnitte (41) des Interaktionsbereichs (101) bezüglich des virtuellen Objekts und der Kontaktkräfte zwischen den mitführbaren Ausschnitten (41) des Interaktionsbereichs (101) und den Fingerkuppen der Nutzerhand (5),
- Aktorik (12) zumindest zur Positionierung der mitführbaren Ausschnitte (41) des Interaktionsbereichs (101) bezüglich des virtuellen Objekts und zur Ausübung von Kontaktkräften auf die Fingerkuppen der Nutzerhand (5) mittels der mitführbaren Ausschnitte (41) des Interaktionsbereichs (101),
und
wobei der haptischen Ausgabeeinheit (1) eine Basisbezugsfläche (7) für die Kraftrückkopplung zugewiesen ist.

2. System nach Anspruch 1, **dadurch gekennzeichnet, dass** das System (100) weiterhin eine Positionssensorik (13) zur kontaktlosen Erfassung der räumlichen Position der Nutzerhand (5) umfasst.

3. System nach Anspruch 1 oder 2, **dadurch gekennzeichnet, dass** die haptische Ausgabeeinheit (1) fünf mitführbare Ausschnitte (41) des Interaktionsbereichs (101) aufweist, so dass an jeder Fingerkuppe der Nutzerhand (5) ein mitführbarer Ausschnitt (41) des Interaktionsbereichs (101) anordenbar ist.

4. System nach einem der vorangehenden Ansprüche, **dadurch gekennzeichnet, dass** die haptische Ausgabeeinheit (1) zur Wiedergabe haptischer Eindrücke mittels eines taktilen Feedbacks auf Fingerkuppen der Nutzerhand (5) ausgebildet ist.

5. System nach Anspruch 4, **dadurch gekennzeichnet, dass** die haptische Ausgabeeinheit (1) eine Aktorik für taktile Reize aufweist, die geeignet ist, die mitführbaren Ausschnitte (41) des Interaktionsbereichs (101) bezüglich ihrer Kontur oder Textur oder Vibrationsart oder Vibrationsstärke oder Temperatur oder Elastizität oder einer Kombination aus den vorgenannten Eigenschaften zu verändern.

6. System nach einem der vorangehenden Ansprüche, **dadurch gekennzeichnet, dass** die haptische Ausgabeeinheit (1) Justageelemente (6) zum Einstellen und Fixieren der relativen Position der fingerbezogenen Positionierelemente (31) zueinander zur Adaptierung an die Größe der Nutzerhand (5) aufweist.

7. System nach einem der vorangehenden Ansprüche, **dadurch gekennzeichnet, dass** das fingerbezogene Positioniersystem und/oder das globale Positioniersystem (21) jeweils zwischen einem und sechs Freiheitsgraden der Bewegung aufweisen.

8. System nach einem der vorangehenden Ansprüche, **dadurch gekennzeichnet, dass** die mitführbaren Ausschnitte (41) des Interaktionsbereichs (101) mittels des fingerbezogenen Positioniersystems so verschiebbar sind, dass zumindest ihr Mittelpunkt oder ihre Flächennormale mit dem Mittelpunkt oder der Flächennormale der virtuellen Fläche (8), bevorzugt ihr Mittelpunkt und ihre Flächennormale mit dem Mittelpunkt und der Flächennormale der virtuellen Fläche (8), übereinstimmt.

9. System nach einem der vorangehenden Ansprüche, **dadurch gekennzeichnet, dass** die Sensorik (11) zumindest zur Erfassung der Position der mitführbaren Ausschnitte (41) des Interaktionsbereichs (101) bezüglich des virtuellen Objekts Mikroschalter mit diskreten Schaltpunkten oder Encoder oder resistive Messelemente oder optische Messelemente oder kapazitive Messelemente oder induktive Messelemente oder eine Kombination aus den Vorgenannten umfasst.

10. System nach einem der vorangehenden Ansprüche, **dadurch gekennzeichnet, dass** das globale Positioniersystem (21) Mittel (211, 212, 213, 214) zur linearen Verschiebung und/oder zur Rotation des fingerbezogenen Positioniersystems umfasst.

11. System nach Anspruch 10, **dadurch gekennzeichnet, dass** die Mittel eine linear verschiebbare Einheit (211) oder einen Roboterarm (212) oder einen Hexapod (213) oder eine Hub-Dreh-Anordnung (214) oder eine Kombination aus den Vorgenannten umfassen.

12. System nach einem der vorangehenden Ansprüche, **dadurch gekennzeichnet, dass** das fingerbezogene Positioniersystem mindestens eine motorisierte Linearachse (311) für jedes fingerbezogene Positionierelement (31) umfasst, mittels derer jeweils ein Neigungswinkel des fingerbezogenen Positionierelements (31) und/oder des mitführbaren Ausschnitts (41) des Interaktionsbereichs (101) gegenüber der Basisbezugsfläche (7) einstellbar ist.

13. System nach einem der vorangehenden Ansprüche, **dadurch gekennzeichnet, dass** die Linearachse (311) einen Zahnriemen-Antrieb oder einen Spindel-Antrieb oder einen Linearmotor oder einen Ultraschall-Piezomotor oder ein Element mit einer Form-Gedächtnis-Legierung oder eine Kombination aus den Vorgenannten umfasst.

14. System nach einem der vorangehenden Ansprüche, **dadurch gekennzeichnet, dass** die haptische Ausgabeeinheit (1) Sensorik (11) zur Erfassung des Neigungswinkels des fingerbezogenen Positionierelements (31) und/oder des mitführbaren Ausschnitts (41) des Interaktionsbereichs (101) gegenüber der Basisbezugsfläche (7) aufweist, wobei diese bevorzugt Winkelgeber (312) oder Kraftsensoren oder Feder-Elemente oder lineare Entfernungssensoren oder eine Kombination der Vorgenannten umfasst.

15. Verfahren zur haptischen Interaktion mit virtuellen Objekten unter Nutzung des Systems nach einem der Ansprüche 2 bis 14, umfassend die Schritte:
- in einem ersten Betriebsmodus, wenn kein Kontakt zwischen einer der Fingerkuppen und einem der mitführbaren Ausschnitte (41) besteht, kontaktloses Ermitteln der Position und der Bewegung der Nutzerhand (5) im Raum in Bezug auf die Position der mitführbaren Ausschnitte (41) mit Hilfe der Positionssensorik (13) und anschließende Visualisierung eines Zielpunktes für jeden mitführbaren Ausschnitt (41), für den kein Kontakt zwischen der entsprechenden Fingerkuppe und dem mitführbaren Ausschnitt (41) besteht, auf dem virtuellen Objekt, wobei der Zielpunkt der realen Position des mitführbaren Ausschnitts (41) entspricht, und/oder Verfahren der mitführbaren Ausschnitte (41), für die kein Kontakt zwischen der entsprechenden Fingerkuppe und dem mitführbaren Ausschnitt (41) besteht, zu einem aus der Position und der Bewegung der Nutzerhand (5) sowie der Position der mitführbaren Ausschnitte (41) berechneten Kollisionspunkt, und
- in einem zweiten Betriebsmodus, wenn ein Kontakt zwischen jedem der mitführbaren Ausschnitte (41) und der diesen zugeordneten Fingerkuppen besteht, Berechnen der Bewegung der Nutzerhand (5) in Bezug auf das virtuelle Objekt aus der Bewegung der Fingerkuppen auf den mitführbaren Ausschnitten (41) und/oder aus einer Kraftwirkung der Fingerkuppen auf die mitführbaren Ausschnitte (41).

## Claims

1. A system (100) for immersion of a user into a virtual world and for haptic interaction of the user with virtual objects, comprising
- a visualisation unit (9) for visualising virtual objects and the user's hand (5),
- a haptic output unit (1) for reproducing haptic impressions at least by means of force feedback on fingertips of the user's hand (5),
- a data processing unit (10) for processing input data and controlling the visualisation unit (9) and the haptic output unit (1),
wherein a virtual object is **characterised by** haptic properties which vary according to location and are simulated by means of an interaction region (101),
**characterised in that** the haptic output unit (1) comprises:
- at least two movement-coupled segments (41) of the interaction region (101), wherein the movement-coupled segments (41) of the interaction region (101) are freely movable within the interaction region (101) and are designed as touch surfaces, and each movement-coupled segment (41) of the interaction region (101) is assigned to one fingertip of the user's hand (5) and can be moved by the latter, wherein the position of the fingertip on the movement-coupled segment (41) can be changed and wherein each of the movement-coupled segments (41) is movable in x- and y-direction independently of the other movement-coupled segments (41) in the range of the flexibility of the user's hand (5),
- a finger-based positioning system comprising at least two finger-based positioning elements (31), each assigned to one movement-coupled segment (41) of the interaction region (101), wherein the finger-based positioning elements (31) and the movement-coupled segment (41) of the interaction region (101) assigned to it are operatively connected and wherein the finger-based positioning system comprises at least one motorised linear axis (311) for each finger-based positioning element (31), by means of which a movement-coupled segment (41) of the interaction region (101) can be displaced in a z-axial direction,
- a global positioning system (21) by means of which the finger-based positioning system can be moved, or which is designed as a displacement of the virtual world in which the virtual object is arranged,
wherein the haptic output unit (1) further comprises:
- a sensor system (11) at least for detecting the position of the movement-coupled segments (41) of the interaction region (101) with respect to the virtual object, and the contact forces between the movement-coupled segments (41) of the interaction region (101) and the fingertips of the user's hand (5),
- an actuator system (12) at least for positioning the movement-coupled segments (41) of the interaction region (101) with respect to the virtual object and for exerting contact forces on the fingertips of the user's hand (5) by means of the movement-coupled segments (41) of the interaction region (101),
and
wherein a base reference surface (7) for the force feedback is assigned to the haptic output unit (1).

2. The system according to claim 1, **characterised in that** the system (100) further comprises a position sensor system (13) for contactless detection of the spatial position of the user's hand (5).

3. The system according to claim 1 or 2, **characterised in that** the haptic output unit (1) has five movement-coupled segments (41) of the interaction region (101), such that one movement-coupled segment (41) of the interaction region (101) can be arranged on each fingertip of the user's hand (5).

4. The system according to any one of the preceding claims, **characterised in that** the haptic output unit (1) is designed to simulate haptic impressions by means of tactile feedback on fingertips of the user's hand (5).

5. The system according to claim 4, **characterised in that** the haptic output unit (1) has an actuator system (14) for tactile stimuli, the actuator system (14) for tactile stimuli being suited for changing the movement-coupled segments (41) of the interaction region (101) with respect to their contour or texture or type of vibration or vibration intensity or temperature or elasticity or a combination of the aforementioned properties.

6. The system according to any one of the preceding claims, **characterised in that** the haptic output unit (1) has adjusting elements (6) for adjusting and fixation of the relative position of the finger-based positioning elements (31) with respect to each other for adaptation to the size of the user's hand (5).

7. The system according to any one of the preceding claims, **characterised in that** the finger-based positioning system and/or the global positioning system (21) each has/have between one to six degrees of freedom of movement.

8. The system according to any one of the preceding claims, **characterised in that** the movement-coupled segments (41) of the interaction region (101) can be displaced by means of the finger-based positioning system in such a manner that at least their centre point or their surface normal coincides with the centre point or the surface normal of the virtual surface (8), and preferably their centre point and their surface normal coincide with the centre point and the surface normal of the virtual surface (8).

9. The system according to any one of the preceding claims, **characterised in that** the sensor system (11) comprises, at least for detecting the position of the movement-coupled segments (41) of the interaction region (101) with respect to the virtual object, microswitches with discrete switching points or encoders or resistive measuring elements or optical measuring elements or capacitive measuring elements or inductive measuring elements or a combination of the aforementioned.

10. The system according to any one of the preceding claims, **characterised in that** the global positioning system (21) comprises means (211, 212, 213, 214) for linear displacement and/or rotation of the finger-based positioning system.

11. The system according to claim 10, **characterised in that** the means comprise a linearly displaceable unit (211) or a robotic arm (212) or a hexapod (213) or a lifting/rotating arrangement (214) or a combination of the aforementioned.

12. The system according to any one of the preceding claims, **characterised in that** the finger-based positioning system comprises at least one motorised linear axis (311) for each finger-based positioning element (31), by means of which an angle of inclination of the finger-based positioning element (31) and/or of the movement-coupled segment (41) of the interaction region (101) can be adjusted with respect to the base reference surface (7).

13. The system according to any one of the preceding claims, **characterised in that** the linear axis (311) comprises a toothed belt drive or a spindle drive or a linear motor or an ultrasonic piezo motor or an element with a shape memory alloy, or a combination of the aforementioned.

14. The system according to any one of the preceding claims, **characterised in that** the haptic output unit (1) comprises a sensor system (11) for detecting the angle of inclination of the finger-based positioning element (31) and/or the movement-coupled segment (41) of the interaction region (101) relative to the base reference surface (7), which preferably comprises angle sensors (312) or force sensors or spring elements or linear distance sensors, or a combination of the aforementioned.

15. A method for haptic interaction with virtual objects using the system according to any one of the claims 2 to 14, comprising the steps of:
- in a first operating mode, when there is no contact between one of the fingertips and one of the movement-coupled segments (41), determining the position and the movement of the user's hand (5) in space in relation to the position of the movement-coupled segments (41) without contact by means of the position sensor system (13), and subsequent visualisation on the virtual object of a target point for each movement-coupled segment (41) for which there is no contact between the corresponding fingertip and the movement-coupled segment (41), wherein the target point corresponds to the real position of the movement-coupled segment (41), and/or moving the movement-coupled segments (41) for which there is no contact between the corresponding fingertip and the movement-coupled segment (41) to a collision point calculated from the position and the movement of the user's hand (5) and the position of the movement-coupled segments (41), and
- in a second operating mode, when there is contact between each of the movement-coupled segments (41) and the fingertips assigned to them, calculating the movement of the user's hand (5) with respect to the virtual object from the movement of the fingertips on the movement-coupled segments (41) and/or from a force effect of the fingertips on the movement-coupled segments (41).

## Revendications

1. Système (100) pour l'immersion d'un utilisateur dans un monde virtuel et pour l'interaction haptique de l'utilisateur avec des objets virtuels, comprenant
- une unité de visualisation (9) pour la visualisation d'objets virtuels et de la main de l'utilisateur (5),
- une unité de sortie haptique (1) pour la restitution d'impressions haptiques au moins au moyen d'un retour de force sur les bouts de doigts de la main de l'utilisateur (5),
- une unité de traitement de données (10) pour le traitement de données d'entrée et la commande de l'unité de visualisation (9) et de l'unité de sortie haptique (1),
dans lequel un objet virtuel est **caractérisé par** des propriétés haptiques variables en fonction du lieu qui sont reproduites au moyen d'une zone d'interaction (101),
**caractérisé en ce que** l'unité de sortie haptique (1) présente :
- au moins deux découpes pouvant être transportées (41) de la zone d'interaction (101), dans lequel les découpes pouvant être transportées (41) de la zone d'interaction (101) sont mobiles librement à l'intérieur de la zone d'interaction (101) et sont conçues sous forme de surfaces tactiles et respectivement une découpe pouvant être transportée (41) de la zone d'interaction (101) est attribuée à un bout de doigt de la main de l'utilisateur (5) et peut être déplacée par celui-ci, dans lequel la position du bout de doigt sur la découpe pouvant être transportée (41) peut être modifiée et dans lequel chacune des découpes pouvant être transportées (41) de la zone d'interaction (101) peut être déplacée dans le cadre du déplacement de la main de l'utilisateur (5) indépendamment des autres découpes pouvant être transportées (41) de la zone d'interaction (101) dans les directions x et y,
- un système de positionnement basé sur les doigts, comprenant au moins deux éléments de positionnement basés sur les doigts (31) attribués à respectivement une découpe pouvant être transportée (41) de la zone d'interaction (101), dans lequel les éléments de positionnement basés sur les doigts (31) et la découpe pouvant être transportée (41) de la zone d'interaction (101) qui leur est attribuée sont en relation fonctionnelle et dans lequel le système de positionnement basé sur les doigts comprend au moins un axe linéaire (311) motorisé pour chaque élément de positionnement basé sur les doigts (31), au moyen duquel axe linéaire respectivement une découpe pouvant être transportée (41) de la zone d'interaction (101) peut coulisser dans une direction axiale z,
- un système de positionnement global (21), au moyen duquel le système de positionnement basé sur les doigts peut être déplacé ou qui est conçu comme un coulissement du monde virtuel dans lequel l'objet virtuel est disposé,
dans lequel l'unité de sortie haptique (1) comprend les éléments suivants :
- des capteurs (11) au moins pour la détection de la position de la découpe pouvant être transportée (41) de la zone d'interaction (101) par rapport à l'objet virtuel et des forces de contact entre les découpes pouvant être transportées (41) de la zone d'interaction (101) et les bouts de doigts de la main de l'utilisateur (5),
- des actionneurs (12) au moins pour le positionnement des découpes pouvant être transportées (41) de la zone d'interaction (101) par rapport à l'objet virtuel et pour l'application de forces de contact sur les bouts de doigts de la main de l'utilisateur (5) au moyen des découpes pouvant être transportées (41) de la zone d'interaction (101),
et
dans lequel une surface de référence de base (7) pour le retour de force est affectée à l'unité de sortie haptique (1).

2. Système selon la revendication 1, **caractérisé en ce que** le système (100) comprend en outre des capteurs de position (13) pour la détection sans contact de la position spatiale de la main de l'utilisateur (5).

3. Système selon la revendication 1 ou 2, **caractérisé en ce que** l'unité de sortie haptique (1) présente cinq découpes pouvant être transportées (41) de la zone d'interaction (101), de sorte qu'une découpe pouvant être transportée (41) de la zone d'interaction (101) peut être disposée sur chaque bout de doigt de la main de l'utilisateur (5).

4. Système selon l'une quelconque des revendications précédentes, **caractérisé en ce que** l'unité de sortie haptique (1) est configurée pour la restitution d'impressions haptiques au moyen d'une rétroaction tactile sur les bouts de doigts de la main de l'utilisateur (5).

5. Système selon la revendication 4, **caractérisé en ce que** l'unité de sortie haptique (1) présente des actionneurs pour des simulations tactiles, lesquels sont configurés pour modifier les découpes pouvant être transportées (41) de la zone d'interaction (101) en ce qui concerne leur contour ou leur texture ou leur type de vibration ou leur intensité de vibration ou leur température ou leur élasticité ou une combinaison des propriétés précitées.

6. Système selon l'une quelconque des revendications précédentes, **caractérisé en ce que** l'unité de sortie haptique (1) présente des éléments d'ajustement (6) pour le réglage et la fixation de la position relative des éléments de positionnement basés sur les doigts (31) les uns par rapport aux autres afin de s'adapter à la taille de la main de l'utilisateur (5).

7. Système selon l'une quelconque des revendications précédentes, **caractérisé en ce que** le système de positionnement basé sur les doigts et/ou le système de positionnement global (21) présentent respectivement entre un et six degrés de liberté de déplacement.

8. Système selon l'une quelconque des revendications précédentes, **caractérisé en ce que** les découpes pouvant être transportées (41) de la zone d'interaction (101) peuvent être coulissées au moyen du système de positionnement basé sur les doigts de sorte qu'au moins leur point central ou leur normale à la surface coïncide avec le point central ou la normale à la surface de la surface virtuelle (8), de préférence leur point central et leur normale à la surface coïncident avec le point central et la normale à la surface de la surface virtuelle (8).

9. Système selon l'une quelconque des revendications précédentes, **caractérisé en ce que** les capteurs (11) au moins pour la détection de la position des découpes pouvant être transportées (41) de la zone d'interaction (101) par rapport à l'objet virtuel comprennent un microrupteur comportant des points de commutation distincts ou un encodeur ou des éléments de mesure résistifs ou des éléments de mesure optiques ou des éléments de mesure capacitifs ou des éléments de mesure inductifs ou une combinaison des éléments précités.

10. Système selon l'une quelconque des revendications précédentes, **caractérisé en ce que** le système de positionnement global (21) comprend des moyens (211, 212, 213, 214) pour le coulissement linéaire et/ou pour la rotation du système de positionnement basé sur les doigts.

11. Système selon la revendication 10, **caractérisé en ce que** les moyens comprennent une unité pouvant être coulissée linéairement (211) ou un bras de robot (212) ou un hexapode (213) ou un agencement de levage et rotation (214) ou une combinaison des éléments précités.

12. Système selon l'une quelconque des revendications précédentes, **caractérisé en ce que** le système de positionnement basé sur les doigts comprend au moins un axe linéaire (311) motorisé pour chaque élément de positionnement basé sur les doigts (31), au moyen duquel axe linéaire respectivement un angle d'inclinaison de l'élément de positionnement basé sur les doigts (31) et/ou de la découpe pouvant être transportée (41) de la zone d'interaction (101) peut être réglé par rapport à la surface de référence de base (7).

13. Système selon l'une quelconque des revendications précédentes, **caractérisé en ce que** l'axe linéaire (311) comprend un entraînement par courroie crantée ou un entraînement par broche ou un moteur linéaire ou un moteur piézoélectrique à ultrasons ou un élément comportant un alliage à mémoire de forme ou une combinaison des éléments précités.

14. Système selon l'une quelconque des revendications précédentes, **caractérisé en ce que** l'unité de sortie haptique (1) présente des capteurs (11) pour la détection de l'angle d'inclinaison de l'élément de positionnement basé sur les doigts (31) et/ou de la découpe pouvant être transportée (41) de la zone d'interaction (101) par rapport à la surface de référence de base (7), dans lequel ceux-ci comprennent de préférence un capteur d'angle (312) ou des capteurs de force ou des éléments à ressort ou des capteurs de distance linéaires ou une combinaison des éléments précités.

15. Procédé pour l'interaction haptique avec des objets virtuels en utilisant le système selon l'une des revendications 2 à 14, comprenant les étapes de :
- dans un premier mode de fonctionnement, lorsqu'aucun contact n'a lieu entre l'un des bouts de doigts et l'une des découpes pouvant être transportées (41), détermination sans contact de la position et du mouvement de la main de l'utilisateur (5) dans l'espace par rapport à la position de la découpe pouvant être transportée (41) à l'aide des capteurs de position (13) et ensuite visualisation d'un point cible pour chaque découpe pouvant être transportée (41), pour laquelle aucun contact n'a lieu entre le bout de doigt correspondant et la découpe pouvant être transportée (41), sur l'objet virtuel, dans lequel le point cible correspond à la position réelle de la découpe pouvant être transportée (41), et/ou déplacement des découpes pouvant être transportées (41), pour lesquelles aucun contact n'a lieu entre les bouts de doigts correspondants et la découpe pouvant être transportée (41), jusqu'à un point de collision calculé à partir de la position et du déplacement de la main de l'utilisateur (5) ainsi que de la position des découpes pouvant être transportées (41), et
- dans un second mode de fonctionnement, lorsqu'un contact a lieu entre chacune des découpes pouvant être transportées (41) et les bouts de doigts qui leur sont attribués, calcul du déplacement de la main de l'utilisateur (5) par rapport à l'objet virtuel à partir du déplacement des bouts de doigts sur les découpes pouvant être transportées (41) et/ou à partir d'une action de force des bouts de doigts sur les découpes pouvant être transportées (41).
